# EUROPÄISCHE PATENTSCHRIFT

(11) **EP 1 004 376 B1**
(45) Veröffentlichungstag und Bekanntmachung des Hinweises auf die Patenterteilung: **12.01.2005**
(21) Anmeldenummer: 99123136.6
(22) Anmeldetag: 19.11.1999
(51) Int. Cl.: B22F 3/11, B22F 7/00

(54) **Metallschaumformkörper**
Metal foam article
Article de mousse métallique

(30) Priorität: 24.11.1998 DE 19854173
(43) Veröffentlichungstag der Anmeldung: 31.05.2000
(73) Patentinhaber: Streuber, Fritz Michael, 32120 Hiddenhausen (DE)
(72) Erfinder: Streuber, Fritz Michael, 32120 Hiddenhausen (DE)
(74) Vertreter: Schwabe - Sandmair - Marx

(56) Entgegenhaltungen:
- EP-A- 0 744 586
- DE-A- 2 147 063

## Beschreibung

Die Erfindung betrifft Metallschaumformkörper und ein Verfahren, bei dem ein Metallschaummaterial eines Formkörpers im Verlaufe der Herstellung des Formkörpers aufgeschäumt wird.

Insbesondere im Leichtbau stellt sich seit jeher ein Problem, Einzelstrukturen - im folgenden Formkörper genannt - den Erfordernissen des späteren Einsatzes entsprechend zu verbinden, nicht zuletzt wegen der Forderung nach geringem Gewicht bei gleichzeitig hoher mechanischer Belastbarkeit und Standfestigkeit sowie möglichst geringen Kosten. Das Problem stellt sich grundsätzlich auch in anderen Bereichen, beispielsweise Schiffsbau, wo besonders großflächige Formkörper, beispielsweise Rumpfsegmente, miteinander zu verbinden sind, da auch dort stets die Forderung nach möglichst wenig Eigengewicht bei gleichzeitig möglichst hoher mechanischer Belastbarkeit solcher Formkörper und daraus zusammengesetzter Verbundkörper besteht.

Eine Möglichkeit der Gewichtseinsparung stellt der Einsatz von Formkörpern aus aufgeschäumtem Metallschaummaterial oder Anteilen solcher Materialien dar. Durch die Porenstruktur des aufgeschäumten Metallschaums besitzt ein Metallschaumformkörper ein geringeres Gewicht als ein aus vollem Material hergestellter Formkörper bei nach wie vor hoher mechanischer Belastbarkeit. Daneben besitzt Metallschaummaterial eine ganze Reihe weiterer vorteilhafter Eigenschaften, wie beispielsweise hohe Stoßabsorptionsfähigkeit, sowie eine gegenüber dem vollem Material verringerte Wärmeleitfähigkeit und elektrische Leitfähigkeit. Um die vorteilhaften Eigenschaften zu erhalten, sollte das aufgeschäumte Material eine möglichst gleichmäßige Schaum- bzw. Porenstruktur haben.

Metallschaummaterialien und daraus hergestellte Halbzeuge und Formkörper sind beispielsweise aus der DE 41 01 630 C2, der DE 43 18 540 AI, der DE 44 16 371 A1, der DE 44 26 627 A1, der DE 196 12 781 01 C 1 und der DE 197 17 894 A1 bekannt. In der DE 43 18 540 A1 wird die Verwendung von Metallschaummaterial im Kraftfahrzeugbau vorgeschlagen. Karosseriebleche werden als Metallschaumformkörper mit einer vollmetallischen Deckschicht und einer aufgeschäumten Metallschaumschicht verwendet. Zum Befestigen von Anbauteilen an diesen Karosserieblechen werden Blechschrauben und dübelartige Befestigungselemente erwähnt. Auch die DE 196 12 781 C 1 betrifft Formkörper für Fahrzeuge. In dem Band "Metallschäume 1997", MIT Bremen, werden im Beitrag "Joining of Aluminium Foams" von N. Sedliakova et al. als Verbindungsmethoden für Metallschaumformkörper, Schraubverbindungen, Löt-, Klebund Schweißverbindungen sowie die Verwendung von eingeschäumten Befestigungselementen beschrieben. Dies sind die zum Verbinden von Formkörpern in der Technik bewährten Verfahren mit ihren hinlänglich bekannten Vor- und Nachteilen.

Die EP 0 744 586 A1 beschreibt einen Wärmeübertragungskörper. Als Beispiele werden Wärmeübertragungsrohre und Wärmeübertragungsplatten genannt. Das die Wärmeübertragungsrohre und umgebende Metallschaummaterial dient der Vergleichmäßigung der Wärmeübertragung zwischen den das Temperierfluid führenden Rohren und einem damit zu temperierenden Körper. Das Temperierfluid wird pro Rohr je durch den freien Rohrinnenquerschnitt geführt.

Aus der WO 00/71285 A1 ist ein Bauteil aus Metallschaum enthaltendem Verbundwerkstoff und ein Verfahren zu seiner Herstellung bekannt, wobei ein aus Halbschalen gebildeter Körper einen Hohlraum bildend erzeugt wird, so dass aufschäumbare Schichten zueinander weisen. Ein solcher Körper wird erwärmt, so dass aufschäumbare Schichten aufgeschäumt werden und im Bereich einer Trennebene ineinander schäumen, so dass eine Befestigung der Halbschalen zueinander gewährleistet wird.

Aufgabe der Erfindung ist es, einen Metallschaumformkörper mit einer für den Verwendungszweck des Formkörpers günstigen Struktur des aufgeschäumten Metallschaummaterials zu schaffen. Für einen großen Teil der Verwendungen des Formkörpers wird eine möglichst gleichmäßige Porenstruktur des Schaummaterials gewünscht.

Diese Aufgabe wird durch die Gegenstände der unabhängigen Patentansprüche gelöst.

Die Erfindung betrifft einen Formkörper mit aufgeschäumtem Metallschaummaterial, der im folgenden wegen dieser Eigenschaft Metallschaumformkörper genannt wird.

Das Schaummaterial kann einen als Hohlkörper ausgebildeten Formkörper vollkommen ausfüllen.

Es kann das Schaummaterial auch nur in einem oder mehreren Formkörperbereichen angeordnet sein und dort Hohlräume ausfüllen oder auch nur ein Strukturteil des Formkörpers verstärken oder Strukturteile verbinden.

Erfindungsgemäß wird das Metallschaummaterial bei seinem Aufschäumen von innen temperiert. Es wird ein Tenoeriermittel durch das Metallschaummaterial geführt. Das Temperiermittel kann so angeordnet sein, dass es erst bei dem Aufschäumen mit aufschäumendem Material in unmittelbaren Kontakt gelangt. Das Temperiermittel kann auch bereits vor dem Aufschäumen in direktem Kontakt zu Metallschaummaterial stehen, um das Aufschäumen dieses Materials beispielsweise bereits zu initiieren. Es kann das Aufschäumen unterstützen oder überhaupt erst ermöglichen, wenn beispielsweise ein Wärmeeintrag bis zu dem Ort des Temperiermittels aufgrund der geringen Wärmeleitfähigkeit des Schaummaterials nicht oder für das Aufschäumen nur unzureichend möglich ist. Es kann auch nur oder zusätzlich zum Heizen als Kühlmittel dienen.

Bei dem Temperiermittel handelt es sich vorzugsweise um einen Strömungskanal zum Durchleiten oder auch nur zum Einleiten eines Temperierfluids durch oder in den Bereich des Formkörpers, in dem das Metallschatunmatehal sich befindet. Mittels eines Strömungskanals kann vorteilhafterweise innerhalb des Gefüges des Metallschaummaterials wahlweise geheizt oder gekühlt werden. Mit solch einem Temperiermittel wird das Metallschaummaterial bei seinem Aufschäumen erhitzt oder zum Abbrechen des Schäumens oder danach gekühlt. Auch eine Kombination aus zwei oder allen drei Temperiermaßnahmen kann eingesetzt werden. Besonders vorteilhaft wird der gesamte Aufschäumvorgang kontrolliert temperiert. Das Schaummaterial wird zum Aufschäumen von innen erwärmt, gegebenenfalls bei einer mittels der Innentemperierung im Vergleich zur Erwärmung von außen sehr genau und gleichmäßig im Schaummaterial einstellbaren Temperatur gehalten und zum Verfestigen gekühlt.

Die Innentemperierung ermöglicht eine besonders gezielte Temperierung eines lokalen Bereichs, in dem Metallschaummaterial angeordnet ist. Es werden damit Bereiche erreicht, in denen sich aufgrund der Form des Formkörpers und der dort angeordneten Metallschaummengen kalte Stellen oder Hitzenester ausbilden könnten, wenn nur von außen geheizt oder gekühlt wird. Es kann sogar in unmittelbarer Nachbarschaft gleichzeitig geheizt und gekühlt werden. Es können Bereiche vor übermäßigem Hitzeeintrag geschützt werden. Es kann von innen geheizt und von außen gekühlt werden, und umgekehrt. Es kann daher die Auswahl an Materialien für die beim Aufschäumen formstabilen Strukturteile vergrößert werden. Es können sogar unterschiedliche Schaummaterialien kombiniert werden, indem ein Material mit niedriger Aufschäumtemperatur durch die Innentemperierung gezielt vor zu großer Hitze eines benachbart angeordneten Materials mit höherer Aufschäumtemperatur geschützt wird.

Im Ergebnis wird das Schäumen von beliebigen Formkörpern möglich. Mittels Innentemperierung können Formkörper beliebiger Innengeometrie und auch solche mit beliebigen äußeren Abmessungen geschäumt werden, für die sonst Spezialöfen gebaut werden müssten. Solche Formkörper können im Ganzen in einem einzigen Heizgang vollkommen oder teilweise ausgeschäumt werden.

Ein erfindungsgemäß mit Metallschaum ausgeschäumter Formkörper zeichnet sich dadurch aus, dass ein innerer und ein äußerer Strömungskanal für ein Temperierfluid durch das Schaumgefüge geführt sind. In einer bevorzugten Ausführungsform wird Temperierfluid im Gegenstrom durchgeleitet.

Entlang des Strömungskanalpaars stellt sich die Temperiertemperatur besonders gleichmäßig ein. Anstatt durch strömungstechnisch getrennte Kanäle kann ein Temperierfluid durch die beiden Strömungskanäle hintereinander durchgeleitet werden. In beiden Strömungsführungen kann der eine der beiden Strömungskanäle den anderen umgeben.

Indem das Schaummaterial bei seinem Aufschäumen von innen gekühlt wird, wird verhindert, dass das Schaummaterial unkontrolliert weiterschäumt. Der Schäumvorgang wird gezielt beendet. Dabei wird der Schäumvorgang dann abgebrochen, wenn die gewünschte homogene Schaumstruktur entstanden ist. Es wird somit verhindert, dass einzelne Schaumporen sich soweit ausweiten, dass sie schließlich zusammenfallen würden. Ohne die erfindungsgemäß kontrollierte Innentemperierung, insbesondere Innenkühlung, würde stets die Gefahr bestehen, dass die Porenwände durch die Ausweitung beim Aufschäumen so dünn werden, dass sie nicht mehr stabil sind und das verbleibende Schaummaterial wegfließt. Es würden in der Folge große Hohlräume im Formkörper entstehen. Dieser Effekt ist als sogenannter Drainage-Effekt bekannt. Dies wird erfindungsgemäß durch die kontrollierte bzw. gesteuerte Innentemperierung verhindert.

In dem Schaumbereich können mehrere der vorstehend beschriebenen Strömungskanalpaare angeordnet sein. Es können auch Kombinationen von Strömungskanalpaaren und einzelnen Strömungskanälen gebildet werden.

Durch die Ausbildung von ineinanderliegenden Strömungskanälen und die Führung des Temperierfluids durch diese Strömungskanäle im Gegenstrom wird die Temperatur des Temperierfluids und damit letztlich des Schaummaterials besonders gleichmäßig über eine große Strömungskanallänge eingestellt. Nach einer besonders bevorzugten Ausführungsform von ineinanderliegenden Strömungskanälen ist der äußere Strömungskanal, in dem der innere Strömungskanal aufgenommen ist, an einem Ende, das im Schäurnmaterial liegen kann, abgeschlossen. Zum Aufschäumen wird das heiße Temperierfluid in den inneren Strömungskanal eingeleitet, durchströmt den inneren Strömungskanal und tritt aus dem inneren Strömungskanal an dem abgeschlossenen Ende des äußeren Strömungskanals in den äußeren Strömungskanal ein. Anschließend strömt es in dem Zwischenraum zwischen dem inneren und dem äußeren Strömungskanal zurück zu einer Temperiereinrichtung. Es findet hierbei ein Wärmeausgleich zwischen dem Temperierfluid im inneren Strömungskanal und dem zurückströmenden Temperierfluid statt, der eine besonders gleichmäßige Temperatur des zurückströmenden Temperierfluids über die gesamte Strömungskanallänge bewirkt.

Anstatt des vorstehend beschriebenen, sackartigen Temperiermittels mit dem Einleiten des Temperierfluids und dem Ausleiten des Temperierfluids zur gleichen Seite, kann das Temperierfluid auch an den jeweils gegenüberliegenden Enden dieser Strömungskanäle eingeleitet und herausgeleitet werden. Dies ist jedoch nur dann möglich, wenn der innere und der äußere Strömungskanal an ihren beiden Enden aus dem Metallschaumbereich herausgeführt werden können. Im Folgenden wird daher statt von einem zurückströmenden Fluid allgemein nur von einem außen strömenden Fluid gesprochen.

Der innere Strömungskanal wird vorzugsweise über seine gesamte Länge, bevorzugt zentriert, beabstandet zu dem äußeren Strömungskanal gehalten. Hierzu dienen zwischen dem inneren Strömungskanal und den äußeren Strömungskanal angeordnete Abstandshalter. Die Abstandshalter sind aus einem hitzebeständigen Material gefertigt, beispielsweise aus Keramik.

Vorzugsweise ist die Strömung des außenströmenden Temperierfluids turbulent. Hierdurch wird die Wärmeleitung von dem inneren Strömungskanal in das außenströmende Temperierfluid und von dem außenströmenden Temperierfluid zu dem Schaummaterial gegenüber einer laminaren Strömung erhöht. Als Mittel zur Erzeugung der Turbulenz können die Abstandshalter ausgebildet sein. Besonders bevorzugt wird die turbulente Außenströmung mittels eines Bandes bewirkt, das spiralig um den inneren Temperierkanal gewickelt ist. In bevorzugter Ausführung dient solch ein Band gleichzeitig auch als Abstandshalter, d.h. es sind darüber hinaus keine weiteren Abstandshalter erforderlich. Vorzugsweise ist das Band als gewirktes Band ausgebildet, insbesondere aus hitzebeständigen Fasern wie z.B. Glasfasern, Keramikfasern oder Kohlenstofffasern. Durch das spiralig auf den inneren Strömungskanal gewickelte Band wird das Temperierfluid ebenfalls spiralig in dem Zwischenraum zwischen dem inneren und dem äußeren Strömungskanal geführt und verwirbelt.

Werden die Strömungskanäle durch Röhren gebildet, so befinden sich diese Röhren bei den Temperaturen des Aufschäumens von beispielsweise 500 bis 800°C im Falle von Al-Schaummaterial, oberhalb der Entfestigungstemperatur von einer ganzen Reihe von metallischen Werkstoffen, die im Falle von Aluminium bei etwa 180°C liegt. Wird Aluminium als Material für den Strömungskanal verwendet, so liegt die Aufschäumtemperatur von Aluminiumschaum ferner nahe oder bereits über der Solidus-Temperatur von Aluminium von rund 660°C. Es besteht im Metallschaumbereich wegen des darin aufschäumenden Materials somit die Gefahr, dass der oder die Strömungskanäle zusammengedrückt werden. Der Strömungskanal oder die mehreren Strömungskanäle werden vorzugsweise aus einem hitzebeständigen Material hergestellt, bevorzugt aus Glas, Keramik, Kohlenstoff und/oder anderen hitzebeständigen Materialien, insbesondere Fasermaterialien. Um die Wärmeleitfähigkeit des besonders hitzebeständigen Materials zu verbessern, werden in das Material der Strömungskanäle Fasern eines anderen Materials eingewirkt, das eine Solidus-Temperatur besitzt, die deutlich über der Solidus-Temperatur des verwendeten Metallschaummaterials liegt. Im Falle von Al-Schaum handelt es sich bei diesen eingewirkten Wärmeleitfasern vorzugsweise um Graphitfasern, Molybdänfasern und/oder Wolframfasern. Die Schmelztemperaturen dieser Materialien liegen deutlich über 2000°C und die Wärmeleitfähigkeit bei 20°C beträgt wenigstens 130 W/mK. Statt der beispielhaft genannten Materialien können als Wärmeleitfasermaterial auch andere Materialien mit einer ausreichend hohen Schmelztemperatur und einer ausreichend guten Wärmeleitfähigkeit, insbesondere mit einer Schmelztemperatur von über 2000°C und einer Wärmeleitfähigkeit von mindestens 130 W/mK, verwendet werden. Sofern ein hitze- und druckbeständiges Material, welches gleichzeitig auch über eine gute Wärmeleitfähigkeit verfügt und mit dem aufzuschäumenden Material verträglich ist, kann der Strömungskanal oder können die mehreren Strömungskanäle auch vollständig aus solch einem Material gefertigt werden. Graphit gibt hierfür ein Beispiel ab.

Im Falle der Verwendung von ineinanderliegenden Strömungskanälen kann nach Beendigung des Aufschäumvorgangs der äußere Strömungskanal im Metallschaumgefüge verbleiben. Der verbliebene, äußere Strömungskanal verbessert die mechanischen Eigenschaften des Formkörpers. Dies kommt insbesondere dann zum Tragen, wenn die Innentemperierung in einem Verbundbereich mehrerer Formkörper eingesetzt wird. Der innere Strömungskanal sowie die Abstandshalter oder das Faserband können vorzugsweise aus dem äußeren Strömungskanal herausgenommen werden, um für eine Wiederverwendung zur Verfügung zu stehen. Der innere Strömungskanal und die Abstandshalter oder das die Abstandshalter ersetzende Faserband können jedoch ebenfalls im Metallschaumgefüge verbleiben. Durch ein bevorzugtes Auffüllen des Hohlraums, der von dem äußeren Strömungskanal umschlossen wird, mit einem Kunststoffmaterial kann der Formkörper, oder der Verbundbereich mechanisch noch weiter verstärkt werden. In allen genannten Fällen entsteht ein faserverstärkter Metallschaumformkörper. Besonders bevorzugt ist die Verwendung eines Strömungskanals oder von ineinander liegenden Strömungskanälen, die aus Kohlefasermaterial hergestellt sind. Es entsteht auf diese Weise ein karbonverstärkter Metallschaumformkörper.

Eine Temperiereinrichtung weist vorzugsweise einen Verbrennungsmotor mit Turbolader auf. Als Heizfluid wird die Abluft verwendet. Als Kühlfluid wird die Zuluft zu dem Lader eingesetzt. Die Antriebskraft des Motors kann zur Stromerzeugung verwendet werden.

Das Temperiermittel kann bei Reparaturen genutzt werden, um einen Wärmeeintrag in den ausgeschäumten Formkörper auf ein unbedenkliches Maß zu reduzieren. Dies ist insbesondere bei Reparaturen nach einem bevorzugten Fügeschäumen vorteilhaft.

Das Temperiermittel bildet auch eine mechanische Verstärkung des geschäumten Formkörpers und wird vorteilhafterweise auch in einer in dieser Hinsicht optimalen Weise angeordnet. Es entsteht so auch ein Faserverbundkörper, wobei ein Temperiermittel eine Faser bildet.

Der Strömungskanal kann perforiert sein, um das Temperiermittel unmittelbar mit dem Schaummaterial in Berührung zu bringen.

In einer weiteren bevorzugten Ausführung wird das Metallschaummaterial von innen mit einem Fluid beaufschlagt, vorzugsweise ein Inertgas oder Reaktionsgas, durch das die oxidative Wirkung eines im aufschäumbaren Metallschaummaterial enthaltenen Treibmittels verringert oder verstärkt wird. Ein hierfür im Fügebereich angeordneter perforierter Strömungskanal kann vorzugsweise durch den vorgenannten Temperierkanal gebildet werden; es kann jedoch ein separater weiterer Kanal, welcher über kleine Öffnungen verfügt, d.h. ein perforierter Kanal, eingebracht werden. Im Falle von ineinanderliegenden Strömungskanälen wäre natürlich der äußere Strömungskanal mit einer Perforation versehen.

Das Temperierfluid und das Fluid zum Steuern einer Oxidation können durch das gleiche Fluid gebildet werden.

Ein bevorzugt verwendeter Formkörper ist aus einem plattenförmigen Schichtmaterial gefertigt, das wenigstens eine Schicht eines aufschäumbaren Metallschaummaterials und eine angrenzende Deckschicht eines damit metallurgisch verträglichen Vollmetallmaterials aufweist. Aus solchem Halbzeug wird durch bekannte Verformungsverfahren, insbesondere Kaltverformung, ein Formkörper im Sinne der Erfindung hergestellt. Typischerweise werden das Schaum- und das Vollmaterial jeweils durch das gleiche Metall oder die gleiche metallische Legierung gebildet, beispielsweise aufschäumbarer Aluminiumschaum und Vollaluminium. Jede verträgliche ungleiche Materialpaarung ist für die Zwecke der Erfindung jedoch ebenso verwendbar, wobei vorzugsweise die Aufschäumtemperatur des Schaummaterials unterhalb der Schmelztemperatur des Vollmaterials liegt. Das Schaummaterial eines oder mehrerer Formkörper kann auch bereits vor dem Verbinden aufgeschäumt sein. Ein oder mehrere der zu verbindenden Formkörper können auch nur aus Metallschaummaterial bestehen.

Mit dem Temperiermittel ist vorzugsweise wenigstens ein Temperierflächengebilde verbunden, das die Außenfläche des Temperiermittels vergrößert. Das Temperierflächengebilde ragt von dem Temperiermittel in das Schaummaterial. Zwischen dem Temperierflächengebilde und dem Temperiermittel sollte eine möglichst gute Wärmeleitverbindung bestehen. Diese zusätzlichen Temperierflächen des Temperierflächengebildes wirken wie Kühl- und/oder Heizrippen. In einer bevorzugten Ausführungsform wird solch ein Temperierflächengebilde durch mehrere winkelig zueinander stehende Flächen gebildet. Vorzugsweise weisen je zwei benachbarte Temperierflächen unter einem Winkel aufeinander zu, der in einem Bereich zwischen 90 und 140°, vorzugsweise 110 bis 130° liegt. Besonders bevorzugt weisen diese Flächen in Ihrem Kantenbereich bzw. in einem gedachten Kantenbereich, falls die Flächen nicht bis zur gedachten Kante durchlaufen, unter einem Winkel aufeinander zu, der 120° beträgt oder einem 120° Winkel möglichst nahekommt. Hierdurch wird erreicht, dass sich das flüssige Metallmaterial, das die einzelnen Poren bzw. Schaumblasen beim Aufschäumen begrenzt, besonders gut an die zusätzlichen Temperierflächen anlegt und dadurch die Wärmeleitung im Gefüge des aufschäumenden Materials besonders gut ist.

In der ersten Ausführungsform werden solche zusätzliche Temperierflächen als strukturierte Blechgebilde ausgeführt. Hierzu können plane Bleche mit einer Taschenbzw- Napfstruktur, beispielsweise durch Prägen, versehen sein. In einer anderen bevorzugten Ausführungsform werden als zusätzliche Temperierflächen zickzackförmig gebogene Blechstreifen verwendet. In beiden Ausführungsformen weisen zwei in einer Kante zusammenlaufende Flächen oder ihre jeweiligen gedachten Verlängerungen unter einem Winkel wie vorstehend beschrieben zusammen. Die einzelne Tasche weist eine Größe auf, die einem Drittel bis zwei Drittel der zu erwartenden durchschnittlichen Größe einer einzelnen Schaumblase bzw. -pore entspricht. Vorzugsweise ist das Volumen der einzelnen Tasche halb so groß wie das zu erwartende Durchschnittsvolumen einer Schaumblase bzw. -pore.

Ein Temperierkanal wird vorzugsweise mittels Abstandshalter in dem auszuschäumenden Formkörper in der gewünschten Position gehalten. Vorzugsweise bildet ein Abstandshalter eine zusätzliche Temperierfläche.

Die Innentemperierung wird mit Vorteil bei einem Fügeverfahren verwendet, bei dem Formkörper mit Hilfe eines Metallschaummaterials zu einem festen Verbundkörper verpresst werden. Hierzu werden die zu verbindenden Formkörper in einem ersten Schritt in ihrer für den Verbund gewünschten Lage relativ zueinander fixiert, vorzugsweise werden sie miteinander verklammert. In ihrem Fügebereich wird mittels einer Fügeklammer ein Raum, insbesondere ein Hohlraum, begrenzt und dadurch umschalt, in dem aufschäumbares Metallschaummaterial angeordnet ist. Das Metallschaummaterial kann vor dem Fügeklammern, während oder auch nach dem Fügeklammern in den durch die Fügeklammer umschalten Raum eingebracht werden. In einem zweiten Schritt wird das aufschäumbare Metallschaummaterial aufgeschäumt, was vorzugsweise durch Erhitzen auf die Aufschäumtemperatur des Metallschaummaterials erfolgt. Durch die mit dem Aufschäumen einhergehende Volumenvergrößerung des Metallschaummaterials und deren Begrenzung durch die ausreichend feste Umschalung werden die Formkörper zu einem Verbundkörper verpresst. Die Fügeklammer selbst wird als Formkörper im Sinne der Erfindung verstanden.

In einer ersten bevorzugten Ausführungsform wird als Fügeklammer eine vorgefertigte separate Fügeklammer verwendet. Diese separate Fügeklammer wird an die zu verbindenden Formkörper angelegt, die vorzugsweise bereits zuvor in der Form des späteren Verbunds passend zueinander angeordnet worden sind, indem sie die Formkörper oder zumindest Teile der Formkörper umgreift. Dabei kann die Fügeklammer die zu verbindenden Formkörper bereits klemmend in ihrer für den Verbund gewünschten relativen Lage zueinander fixieren. Eine nicht klemmende Anbringung der Fügeklammer ist jedoch ebenfalls möglich.

Nach einem zweiten bevorzugten Ausführungsbeispiel wird die Fügeklammer durch entsprechende Ausbildung der zu verbindenden Formkörper gebildet, so dass die Anbringung eines separaten Verbindungsteils entfallen kann. Die Fügeklammer ist in diesem Fall integrierter Bestandteil eines der Formkörper oder wird im Zusammenwirken der Formkörper gebildet.

Durch Einlegen eines passenden Ergänzungsprofils kann Schaummaterial in Bezug auf den Aufschäumvorgang und den späteren ausgeschäumten Formkörper in optimierter Menge und Form in den Aufschäumbereich eingebracht werden. Falls der Formkörper selbst keine aufschäumbaren Metallschaummaterialien im Aufschäumbereich enthält, wird Schaummaterial auf diese Weise zumindest durch ein Ergänzungsprofil geliefert.

Bevorzugte Ausführungsbeispiele werden nachfolgend anhand von Figuren erläutert. Es zeigen:
- Fig. 1a: zwei Formkörper und eine Fügeklammer positioniert für eine Fügeverbindung,
- Fig. 1b: die Fügeverbindung der Fig. 1a nach dem Aufschäumen,
- Fig. 2a: zwei Formkörper und eine Fügeklammer mit Stützprofil positioniert für eine Fügeverbindung,
- Fig. 2b: die Fügeverbindung der Fig. 2a nach dem Aufschäumen,
- Fig. 3a: zwei Formkörper und eine rechteckförmige Fügeklammer positioniert für eine Fügeverbindung,
- Fig. 3b: die Fügeverbindung der Fig. 3a nach dem Aufschäumen,
- Fig. 4a: zwei Formkörper und eine rechteckförmige Fügeklammer mit innenliegenden Schenkeln positioniert für eine Fügeverbindung,
- Fig. 4b: die Fügeverbindung der Fig. 4a nach dem Aufschäumen,
- Fig. 5a: zwei bereits aufgeschäumte Formkörper und eine trapezförmige, ebenfalls bereits aufgeschäumte Fügeklammer positioniert für eine Fügeverbindung,
- Fig. 5b: die Fügeverbindung der Fig. 5a nach dem Aufschäumen,
- Fig. 6a: zwei Formkörper mit integrierter Fügeklammer positioniert für eine Fügeverbindung,
- Fig. 6b: die Fügeverbindung der Fig. 6a nach dem Aufschäumen,
- Fig. 6c: die Fügeverbindung nach Fig. 6a, jedoch mit geschlitzten Deckblechen der Formkörper,
- Fig. 6d: die Fügeverbindung der Fig. 6c nach dem Aufschäumen,
- Fig. 7a: zwei Formkörper und eine Fügeklammer mit Montage- bzw. Aufnahmehülse positioniert für eine Fügeverbindung,
- Fig. 7b: die Fügeverbindung der Fig. 7a nach dem Aufschäumen,
- Fig. 8: einen Kreuzverbund,
- Fig.9a-d: Abstandshalter,
- Fig. 10: ein Hohlprofil mit Temperierkanal und Ergänzungsprofilen,
- Fig. 11: ein Hohlprofil mit Temperierkanälen, Abstandshaltern nach Fig. 9d und Ergänzungsprofilen, und
- Fig. 12: einen Metallschaumbereich mit ineinander liegenden Strömungskanälen.

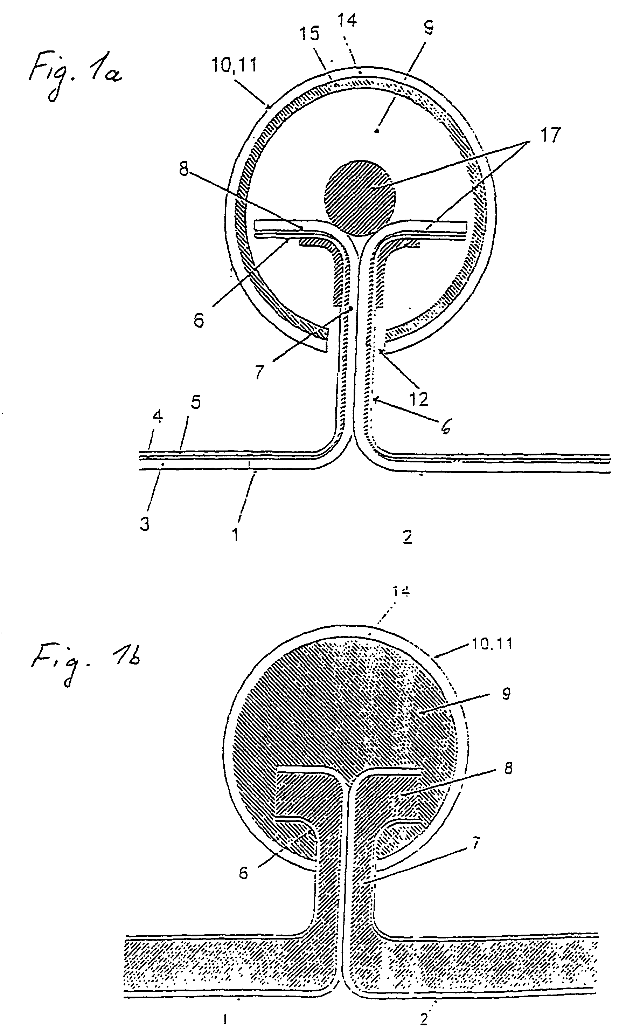

Fig. 1a zeigt einen Fügebereich eines ersten Formkörpers 1 und eines zweiten Formkörpers 2 in einem Querschnitt. Bei den Formkörpern 1 und 2 handelt es sich um entsprechend dem späteren Verwendungszweck vorgeformte Segmente, beispielsweise Karosseriebleche eines Kraftfahrzeugs oder Rumpfsegmente eines Schiffs oder Luftfahrzeugs. Zur Herstellung der Formkörper 1 und 2 wird ein plattenförmiges Halbzeug verwendet bestehend aus einer aufschäumbaren Schicht 4 eines Metallschaummaterials, das sandwichartig zwischen einer unteren und einer oberen vollmetallischen Deckschicht 3 und 5 angeordnet ist Der Schichtverbund im Halbzeug für die Formkörper 1 und 2 kann beispielsweise mittels Klebung oder Diffüsionshaftung hergestellt sein. Aus solch einem Halbzeug werden nach Durchführung eines Trennverfahrens die Formkörper 1 und 2 durch Kaltverformung erhalten.

An jedem der Formkörper 1 und 2 ist längs einer seiner Seitenkanten je ein Anschlussprofil 6 durch zweifaches Umkanten ausgebildet. Solch ein Anschlussprofil 6 in Form einer Bördelkante weist einen vom jeweiligen Formkörper 1 bzw. 2 abragenden ersten Steg 7 und einen daran anschließenden, wieder zum gleichen Formkörper hin umgekanteten zweiten Steg 8 auf. Der zweite Steg 8 verläuft im Ausführungsbeispiel beabstandet parallel zu dem darunter liegenden Endbereich des jeweiligen Formkörpers 1 bzw. 2. Zum Herstellen eines Formkörperverbunds sind die Formkörper 1 und 2 mit ihren Anschlussprofilen 6 aneinander stoßend in Position gelegt und in dieser Position fixiert worden. Anschließend wurde eine Fügeklammer 10 angelegt, so dass die aneinander stoßenden Anschlussprofile 6 von der Fügeklammer 10 umgriffen werden.

Die Fügeklammer 10 wird durch ein im Querschnitt kreisförmiges Hohlzylinderprofil 11 gebildet, das in seiner Längsrichtung von der geraden, von einer Stirnseite zur anderen Stirnseite durchgehenden Öffnung 12 durchbrochen wird. Die Fügeklammer 10 ist ebenfalls aus einem plattenförmigen Metallschaumhalbzeug hergestellt. Hierfür wird das Halbzeug rechteckförmig zugeschnitten und in die hohlzylindrische Profilform kaltverformt, beispielsweise gebogen oder gewalzt. Ebenso wäre die Herstellung aus einem hohlzylindrischen Halbzeug durch Heraustrennen der Längsöffnung 12 möglich. Bei dem Halbzeug der Fügeklammer 10 handelt es sich ebenfalls um Schichtmaterial, im Ausführungsbeispiel der Fig. 1a um ein zweischichtiges Material, mit einer aufschäumbaren Schicht 15 eines Metallschaummaterials und einer vollmetallischen Deckschicht 14 aus dem gleichen Metall. Ein Verbund zwischen den beiden Schichten 14 und 15 kann beispielsweise durch Klebung oder Diffusionshaftung hergestellt sein. Im Hohlzylinderprofil 11 bildet die aufschäumbare Schicht 15 die von der äußeren Deckschicht 14 umhüllte Innenschicht.

Nach dem Anlegen umgreift die Fügeklammer 10 die beiden aneinander stoßenden Anschlussprofile 6. Ihre beiden die Öffnung 12 begrenzenden Längskanten kommen beidseits der Anschlussprofile 6 im Bereich der ersten Stege 7 zu liegen. Zwischen den ersten Stegen 7 und den Längskanten der Fügeklammer 10 verbleibt ein Spalt. Die voneinander wegweisenden zweiten Stege 8 kommen im Bereich der größten Querschnittserstreckung des Hohlzylinderprofils 11 zu liegen. Die Fügeklammer 10 wird längs auf die Anschlussprofile 6 aufgeschoben, da sie selbst nicht verformbar ist.

Die Fügeklammer 10 wird in der gezeigten Lage gehalten, in der sie den Fügebereich mit den beiden Anschlussprofilen 6 wie eine Schale umgibt. Sie wird im Ausführungsbeispiel durch Haltemittel in der gezeigten Stellung zu den Formkörpern 1 und 2 gehalten. Die Fügeklammer 10 kann grundsätzlich jedoch auch mit einer geringen Elastizität ausgestattet sein, so dass sie bereits in der gezeigten Ausgangsstellung der Formkörper 1 und 2 diese beiden Formkörper in dieser Ausgangsstellung zusammenklemmt und fixiert, insbesondere indem sie die Stege 7 im Bereich der Öffnung 12 der Fügeklammer 10 gegeneinander presst. Es wäre bei entsprechend abgestimmter Formgebung der Formkörper 1 und 2 und der Fügeklammer 10 auch möglich, die Fügeklammer 10 vor dem Aufschäumen auf den Formkörpern 1 und 2 oder deren Anschlussprofilen 6 aufsitzend in der für den Verbund gewünschten Lage formschlüssig zu halten. Sie weist in jedem Falle eine ausreichend große Eigensteifigkeit aus, so dass sie bei einem späteren Aufschäumen von Metallschaummaterial die Schalungsfunktion und damit einhergehende Verklammerungsfunktion ausüben kann.

Nach oder auch vor dem Anlegen der Fügeklammer 10 werden in einen Raum 9, der durch das Hohlzylinderprofil 11, insbesondere die Deckschicht 14, umschalt wird, Ergänzungsprofile 17 aus einem aufschäumbaren Metallschaummaterial eingelegt. Die Ergänzungsprofile 17 dienen der Einstellung der Schaummaterialmenge und der später daraus folgenden Dichte des aufgeschäumten Schaummaterials innerhalb des von dem Hohlzylinderprofil 11 begrenzten Raums 9. Die Form solcher Ergänzungsprofile und die Menge des dadurch eingebrachten, aufschäumbaren Metallschaummaterials wird der Geometrie des Hohlzylinderprofils 11 und der in das Hohlzylinderprofil 11 hineinragenden Anschlussprofile 6 angepasst gewählt. Hierdurch ist eine besonders genaue Anpassung des im Raum 9 befindlichen Metallschaummaterials nach Form und Menge möglich. Eine weitere Anpassungsmöglichkeit bietet das gezielte Herausarbeiten von Metallschaummaterial, beispielsweise aus der aufschäumbaren Schicht 15 der Fügeklammer 10.

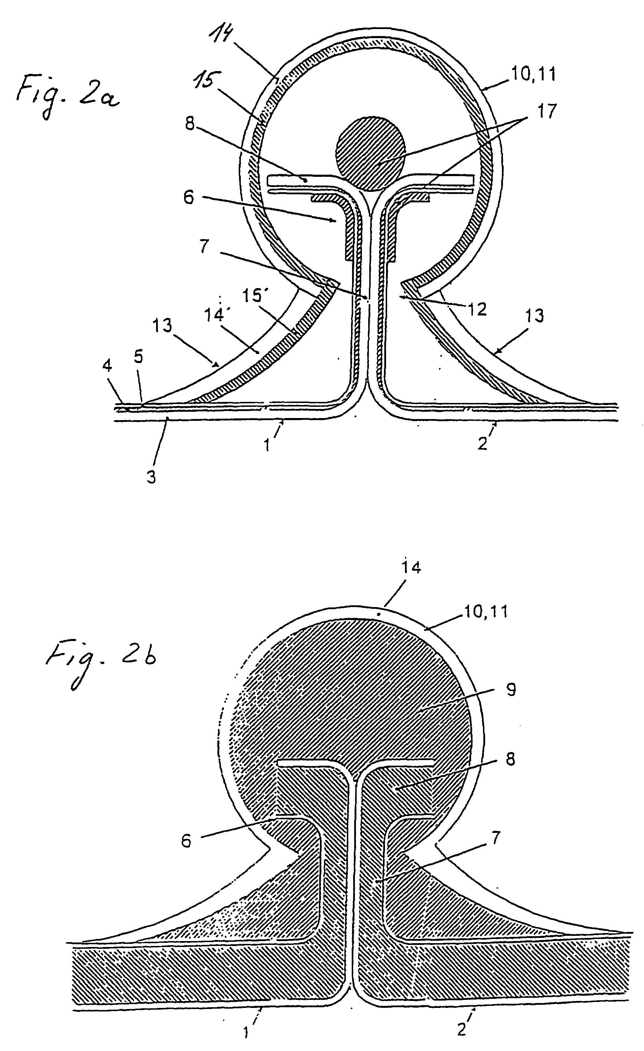

In Fig. 2a ist eine zweite Ausführungsform einer Fügeklammer 10 dargestellt. Bei dieser Fügeklammer 10 setzt längs zu beiden Seiten der Öffnung 12 des Fügeklammerhohlprofils 11 je ein Stützprofil 13 an. Solch ein Stützprofil 13 kann beispielsweise durch Umbiegen bereits im Zuge der Formung des Hohlzylinderprofils 11 angeformt werden. Mit seiner freien Längskante sitzt solch ein Stützprofil 13 im angelegten Zustand der Fügeklammer 10 auf einem der Formkörper 1 und 2 auf. Bei horizontaler Ausrichtung bedarf es keiner zusätzlichen Halterung für diese Fügeklammer 10. Jedes der Stützprofile 13 bildet eine Querverstrebung zwischen dem jeweiligen Formkörper 1 und 2 und dem vom Formkörper aufragenden Anschlussprofil 6. Die Stützprofile 13 versteifen den Formkörperverbund zusätzlich.

Hierdurch kann einer gegebenenfalls vorhandenen Verformungsneigung, beispielsweise einer Verwindungsneigung des einzelnen Formkörpers 1 und 2, entgegengewirkt werden. Die Stützwirkung bleibt auch nach dem Herstellen des Verbunds erhalten. Die Stützprofile 13 werden durch das gleiche plattenförmige Halbzeug wie das Hohlzylinderprofil 11 gebildet, könnten grundsätzlich jedoch auch aus einem anderen Halbzeug aus verträglichem Material hergestellt sein. Auch bei den Stützprofilen 13 wird eine innere, aufschäumbare Schicht 15' eines Metallschaummaterials von einer äußeren Deckschicht 14' eines vollmetallischen Materials bedeckt. Jedes Stützprofil 13 begrenzt durch seine strebenförmige Anordnung den Innenkantenraum im Fußbereich des jeweiligen Anschlussprofils 6. Da in diesem Innenkantenraum das aufschäumbare Material der Schicht 15' vorhanden ist, wird auch dieser Raum bei dem späteren Aufschäumen ausgeschäumt und dadurch der Verbund weiter versteift. Von den Stützprofilen 13 und den damit einhergehenden Vorteilen abgesehen entspricht die Anordnung der Fig. 1 b vollkommen derjenigen der Fig. 1a, so dass auf die vorstehenden Erläuterungen dazu auch im Zusammenhang mit der Anordnung nach Fig. 1 b verwiesen sei.

Fig. 1b und Fig. 2b zeigen den jeweiligen nach dem Aufschäumen des Metallschaummaterials entstandenen Pressverbund der beiden Formkörper nach den Fig. 1a und 2a und der Fügeklammer 10 für die vorher beschriebenen Fügeklammerverbindungen. Dabei ist deutlich zu erkennen, dass die Fügeklammer 10, nämlich deren Deckschicht 14, zusammen mit den Anschlussbereichen der Formkörper 1 und 2, im wesentlichen jedoch die Fügeklammer 10 allein, eine Einschalung für das aufschäumende und schließlich das aufgeschäumte Metallschaummaterial im Raum 9 sowie im Innenkantenbereich des Anschlussprofils 6 des zweiten Formkörpers 2 bilden. Dabei füllt das aufgeschäurnte und wieder erkaltete Metallschaummaterial beide Räume gleichmäßig aus.

Grundsätzlich würde es genügen, die Anschlussprofile 6 als einfach aufragende Stege 7 auszubilden. Auch dann würden die beiden Formkörper 1 und 2 mit den aneinander stoßenden Stirnflächen ihrer jeweiligen Anschlussprofile 6 fest gegeneinander gepresst und bereits dadurch verbunden werden. Des weiteren ist nach dem Aufschäumen im Inneren in der Umschalung eine zusammenhängende, homogene Metallschaumstruktur entstanden, die vom Metallschaummaterial des ersten Formkörpers 1 über das Metallschaummaterial im Hohlzylinderprofil 11 der Fügeklammer 10, das eine Brücke bildet, zum Metallschaummaterial des zweiten Formkörpers 2 reicht. Zur Erhöhung der Festigkeit dieses Verbunds, der so bereits einen kombinierten Kraft- und Stoffverbund bildet, trägt noch die Formgebung der Anschlussprofile 6 bei, die aufgrund ihrer Form als Verankerung wirken. In der Matrix des aufgeschäumten Metallschaummaterials innerhalb des Fügeklammerhohlprofils 11 sind die Formkörper 1 und 2 aufgrund der Ausbildung der zweiten Stege 8 pilzförmig bzw. widerhakenförmig verankert.

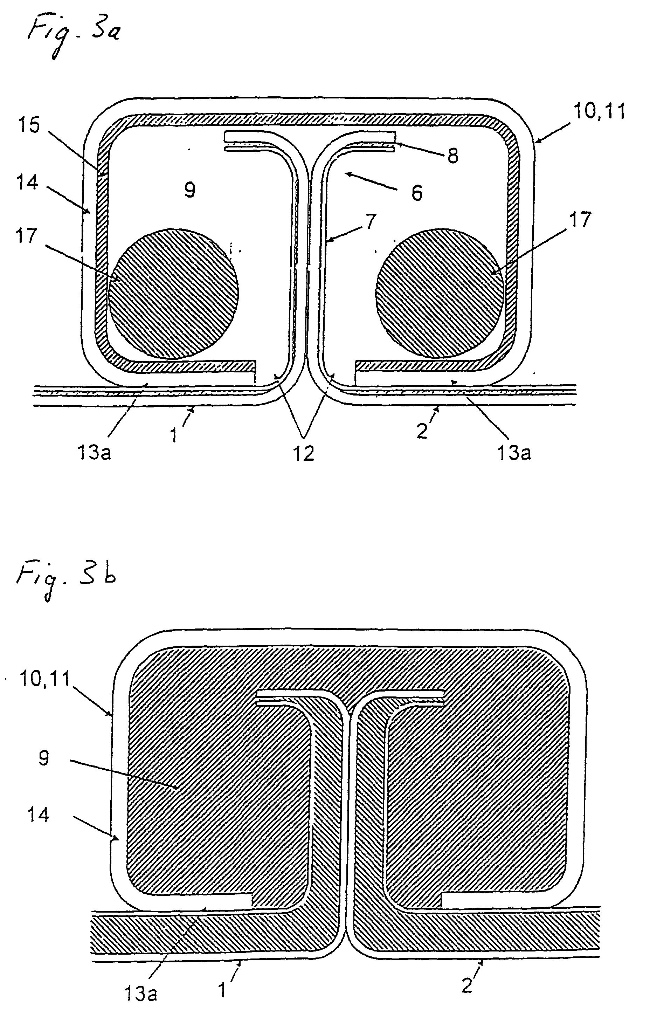

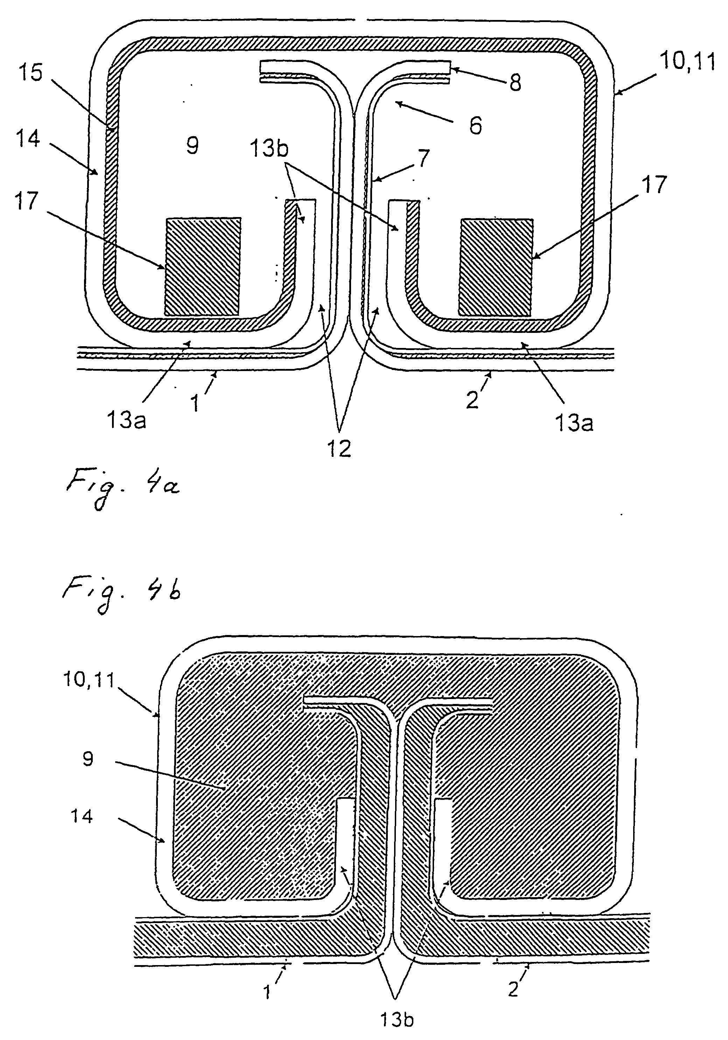

Die Fig. 3a und 4a zeigen den Fügebereich zweier Formkörper 1 und 2, die jeweils unterschiedlich starke vollmetallische Deckschichten und eine dazwischen liegende Schicht eines aufschäumbaren Metallschaummaterials aufweisen, wie die Formkörper des Ausführungsbeispiels der Fig. 1a und 2a. Die Fügeklammer 10 des Ausführungsbeispiele der Fig. 3a und 4a wird durch ein Hohlzylinderprofil 11 in einer einfachen Rechteckquerschnittsform mit der durchgehenden Längsöffnung 12 gebildet. Während die Fügeklammer 10 des Ausführungsbeispiels nach Fig. 3a in zwei aufeinander zu weisenden, die Längsöffnung 12 zwischen sich bildenden Längsschenkeln 13a ausläuft, sind bei der Fügeklammer 10 der Fig. 4a die beiden Schenkel 13a in den Innenraum 9 des Hohlzylinderprofils 11 hinein gebogen und erstrecken sich derart ein Stück weit parallel beabstandet zu dem Steg 7 des zugewandten Anschlussprofils 6. In beiden Ausführungsbeispielen liegt die Fügeklammer 10 mit den beiden die Längsöffnung 12 zwischen sich bildenden Rechteckschenkeln 13a auf den Formkörpern 1 und 2 auf. Die Fügeklammer 10 wird beim Aufschäumen mit ihren Schenkeln 13a fest gegen die gegenüberliegenden Oberflächen der Formkörper 1 und 2 gepresst. Durch dieses Anpressen im Zusammenwirken mit der Gegenkraft aufgrund der Pilzform der Anschlussprofile 6 wird der Formkörperverbund zusätzlich versteift. Bei Fig. 4a ist durch die zusätzlich nach innen gebogenen Schenkel 13b eine noch steifere Verbindung der Formkörper durch die Fügeklammer als bei dem Ausführungsbeispiel 3a vorhanden. Falls erforderlich, werden die Formkörper 1 und 2 für den Fügevorgang zusätzlich von außen fixiert.

Fig. 3b und 4b zeigen die oben beschriebenen rechteckförmigen Fügeklammern 10 nach dem Aufschäumen. Dabei ist der von der Fügeklammer 10 und den beiden Formkörpern 1 und 2 umschlossene Raum 9, gleichmäßig und vollständig mit dem aufgeschäumten Metallschaum ausgefüllt. So ergibt sich ähnlich wie bei den vorher beschriebenen Ausführungsbeispielen eine feste Verbindung der beiden Formkörper 1 und 2 durch Kraft- und Formschluss.

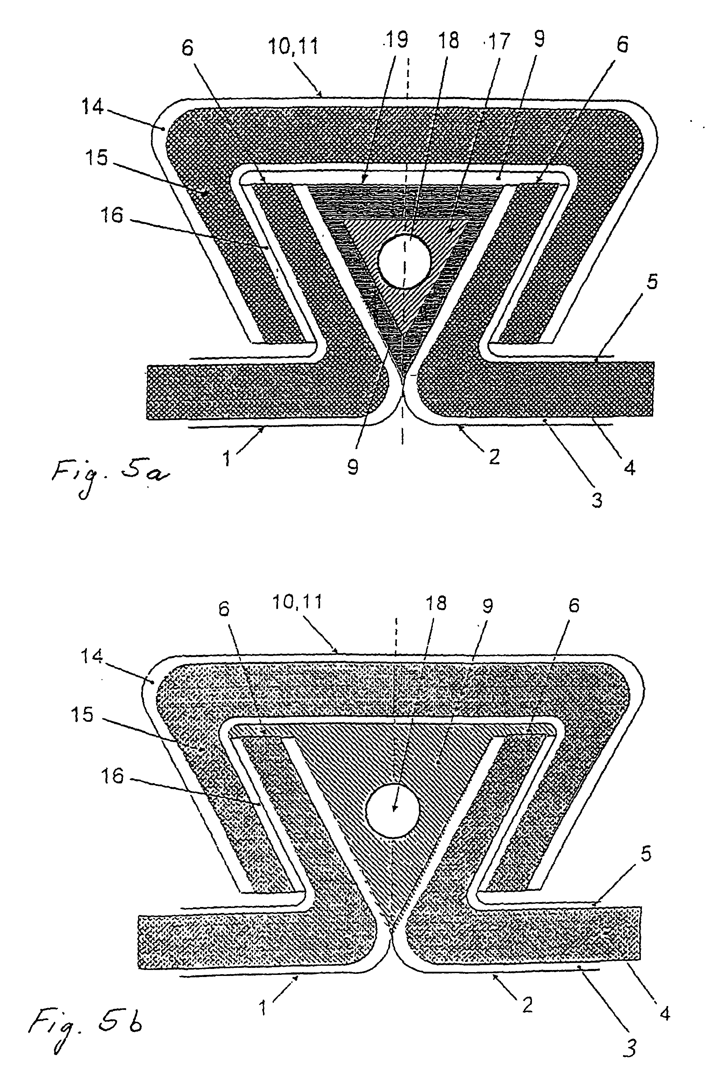

Die Fig. 5a und 5b zeigen ein Ausführungsbeispiel eines Formkörperverbunds vor und nach einem Aufschäumen, bei dem sowohl die Formkörper 1 und 2 als auch die Fügeklammer 10 durch bereits aufgeschäumte Metallschaumformkörper gebildet werden. Dabei handelt es sich wieder um Profile, die aus plattenförmigen Halbzeugen hergestellt sind. Ausgangsmaterial der Profile 1, 2 und 10 ist ein dreischichtiges Halbzeug, bei dem die mittlere, aufgeschäumte Metallschaumschicht 4 beidseitig durch je eine vollmetallische Deckschicht 3 und 5 bedeckt ist. Die Formkörper 1 und 2 und die Fügeklammer 10 erfahren beim Aufschäumen zum Zwecke des Verbindens der Formkörper 1 und 2 keine weitere Volumen- oder Formänderung. Die Fügeklammer 10 kann auch zunächst als Hohlprofil geformt und ganz oder teilweise mittels eingelegten Ergänzungsprofilen ausgeschäumt werden, anstatt sie aus einem Plattenmaterial mit aufgeschäumter Schicht zu formen.

Vor dem Aufschäumen sind die Formkörper 1 und 2 durch die Fügeklammer 10 rein formschlüssig in der für den Verbund gewünschten Lage gehalten. Die Anschlussprofile 6 dieses Ausführungsbeispiels werden durch einmaliges Umkanten bzw. Umbiegen parallel je einer Längskante jedes der Formkörper 1 und 2 gebildet. Die Längskanten der Formkörper sind um mehr als 90 Grad umgebogen und dadurch zum jeweiligen Formkörper hin wieder zurückgebogen, wodurch ein V-förmiger Innenkantenbereich entsteht. In Anpassung an dieses Anschlussprofilpaar weist die Fügeklammer 10 ein Hohlzylinderprofil 11 auf, wie es aus einem rechteckigen Plattenmaterial erhalten werden kann, wenn zwei einander gegenüberliegende Längskanten aufeinander zu umgekantet werden. Im Querschnitt entsteht so eine hohlzylindrische Dreieckform, wobei das Dreieck an einer Spitze zur Ausbildung einer Längsöffnung abgeschnitten bzw. offen ist. Nach einem Aufschieben der Fügeklammer 10 über die Anschlussprofile 6 der Formkörper 1 und 2 weist diese Anordnung im Fügebereich die Form einer Schwalbenschwanzverbindung auf.

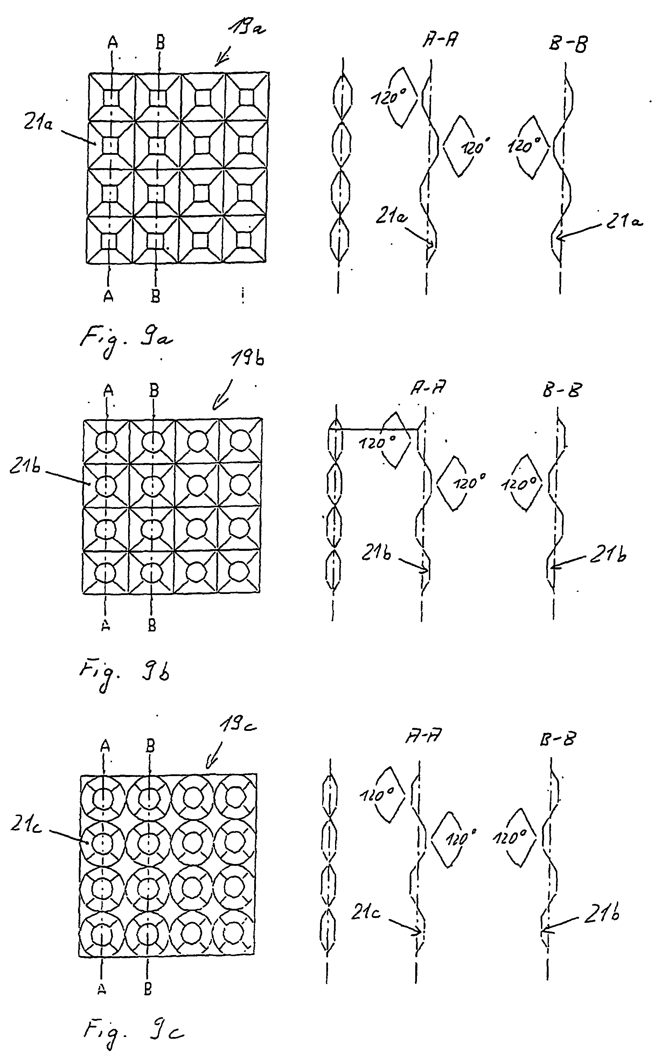

Um die Formkörper 1 und 2 beim Aufschäumen noch besser in der gewünschten Lage zu fixieren, wird in dem von der Fügeklammer 10 begrenzten Raum 9 wenigstens ein Abstandshalter 19 angeordnet. Im Ausführungsbeispiel werden mehrere, der Form der Anschlussprofile 6 bzw. der Fügeklammer 10 entsprechend plattenförmige, dreieckige Abstandshalter 19 verwendet, die in Längsrichtung des Verbunds voneinander beabstandet wie Keile zwischen den einander zugewandten Flächen der Anschlussprofile 6 sitzen. Es entsteht so ein durch die beiden einander gegenüberliegenden, aufeinander zu weisenden Schenkel der Fügeklammer 10 zusammengehaltener, quer zur Längsrichtung vollkommen definierter Formschluss. Das Material der Abstandshalter 19 wird so gewählt, dass deren Schmelztemperatur ausreichend oberhalb der Aufschäumtemperatur des zum Herstellen des Verbunds aufzuschäumenden Metallschaummaterials liegt. Die Abstandshalter 19 können beispielsweise aus dem gleichen Material wie die vollmetallischen Deckschichten der Formkörper 1 und 2 oder der Fügeklammer 10 bestehen. Als aufschäumbares Metallschaummaterial ist in dem durch die derart gebildete Einschalung begrentzten Raum 9 lediglich das Material von Ergänzungsprofilen 17 vorhanden. Die Abstandshalter können aus Draht oder Blech gebildet sein. Im Ausführungsbeispiel sind es Bleche, beispielsweise strukturierte Bleche nach den Fig. 9a bis c.

Der umschalte Raum 9 wird von innen mittels eines im Raum 9 angeordneten Temperiermittels 18 temperiert. Das Temperiermittel 18 wird durch einen durchgehenden Strömungskanal gebildet, durch den zum einen zum Zwecke des Heizens zum Aufschäumen ein Heizfluid oder zum anderen ein Kühlfluid zum Zwecke des Abkühlens am Ende des Aufschäumens und auch noch danach durchgeleitet wird. Falls sowohl geheizt als auch später gekühlt werden soll, kann es zweckmäßig sein, für jeden dieser Zwecke einen separaten Strömungskanal in der Art des Kanals 18 vorzusehen.

Desweiteren kann der Kanal 18 oder auch ein separater eigener Kanal zum Einleiten eines Inertgases oder eines Reaktionsgases verwendet werden, mit dem das Metallschaummaterial beim Aufschäumen beaufschlagt wird, um oxidative Wirkungen eines darin enthaltenen Treibgases zu verringern oder zu verstärken. Solch ein Antioxidants- oder Oxidantsmittel kann gleichzeitig auch ein Heiz- und/oder Kühlfluid bilden. Damit das Inert-oder Reaktionsgas mit dem Metallschaum in Berührung kommt und reagiert, ist ein für diesen Zweck vorgesehener Kanal mit kleinen Öffnungen, einer sogenannten Perforation versehen.

Durch ein gezieltes Aufheizen und Abkühlen der eingelegten, aufschäumbaren Ergänzungsprofile 17 über ein durch den Strömungs- bzw. Temperierkanal 18 strömendes Temperierfluid kann besonders sicher gewährleistet werden, dass die schon vor dem Fügen aufgeschäumten Profile 1,2 und 10 von dem Fügeschäumen nicht beeinflusst werden, z.B. durch unerwünschtes Initiieren eines erneuten Schäumens der Profile 1, 2 und 10. Der Kanal 18 kann aus einem Rohr mit beliebiger Querschnittsform gebildet sein, wobei das Rohr aus einem Material besteht, welches eine ausreichend höhere Schmelztemperatur besitzt als die zum Aufschäumen benötigte Temperatur des Temperierfluids.

Die Ergänzungsprofile 17 sind mit einem Bohrung versehen, welche in Form und Größe dem des Rohrquerschnittes gleicht. Die Ergänzungsprofile 17 können so auf den Kanal 18 abwechselnd mit den Abstandshaltern 19 aufgefädelt und in den Hohlraum 9 eingeführt werden. Die Abstandshalter 19 sind so geformt, dass sie den Kanal 18 mit den aufgefädelten Ergänzungsprofilen 17 mittig in dem Hohlraum 9 halten. Die Abstandshalter 19 bilden gleichzeitig radial abragende Kühlrippen und/oder Heizrippen des Temperierkanals 18. Sie dienen insbesondere zum Aufheizen der Ergänzungsprofile 17. Nach dem Aufschäumen wird ihre gegenüber dem Metallschaum deutlich höhere Wärmeleitfähigkeit dazu genutzt, die Schaumphase im Raum 9 schnell und gezielt abzukühlen.

Im Raum 9 können mehrere Temperierkanäle 18, je wenigstens ein Kanal für jeden der genannten Zwecke oder auch mehrere für jeden der genannten Zwecke angeordnet sein.

Das aufschäumbare Metallschaummaterial ist den Kanal 18 unmittelbar umgebend angeordnet. Hierdurch ist es möglich, Temperiermittel und Metallschaummaterial in einem Arbeitsgang im Fügebereich zu integrieren. Dabei ist es auch möglich, im Handel erhältliche Strangprofile aus ungeschäumtem Metallschaummaterial zu durchbohren und auf dem Temperierkanal 18 aufzufädeln. Die Ergänzungsprofile 17 sollten dabei fest auf dem Temperierkanal sitzen um einen guten Wärmeübergang zu gewährleisten. Falls entlang des Temperierkanals 18 Abstandshalter 19 angeordnet sind, können die einzelnen Ergänzungsprofile 17 jeweils zwischen solchen Abstandshaltern 19 aufgefädelt sein. Ein Temperierkanal 18 kann durch ein einstückiges Rohr gebildet werden, auf das die Abstandshalter 19 aufgeschoben und damit vorzugsweise gut wärmeleitend verbunden werden. Dabei werden Ergänzungsprofile 17 je zwischen den Abstandshaltern 19 aufgefädelt. Solch ein Temperierkanal 18 kann auch abschnittsweise zusammengestückelt sein, beispielsweise durch Einpressen von aneinander stoßenden Kanalstücken in je eine Verbindungsmuffe.

Ein Temperierkanal oder mehrere Temperierkanäle und Abstandshalter, wie vorstehend beschrieben, können auch in den Hohlräumen der Fügeklammer 10 der Ausführungsbeispiele nach den Figuren 1a bis 4b vorgesehen sein.

Fig. 5b zeigt den Formkörperverbund nach dem Aufschäumen. Das aufgeschäumte Metallschaummaterial des Ergänzungsprofils 17 oder der mehreren Ergänzungsprofile 17, falls mehrerer solcher Profile 17 entlang des Temperierkanals 18 aufgefädelt sind, füllt dann den Raum 9 aus und stellt so den unlösbaren, hochfesten Pressverbund zwischen den Formkörpern 1 und 2 sowie der Fügeklammer 10 her. Die durch das Aufschäumen entstehenden Kräfte werden, an der Kontaktfläche zwischen den Formkörpern 1 und 2 und der Fügeklammer 10 wie an einem Keil in eine tangential und eine normal zu den Anschlussprofilen 6 gerichtete Kraft aufgeteilt und pressen dadurch die Anschlussprofile 6 gegen die Innenwände der Fügeklammer 10.

Aufgrund der Integration eines Temperiermittels, im Ausführungsbeispiel der Kanal 18, ist auch der Austausch eines beschädigten Formkörpers oder eines beschädigten Formkörperbereichs auf sehr einfache Weise möglich, da mit Hilfe des Kanals 18 eine nur lokale Erwärmung im Fügebereich des Austauschformkörpers bewerkstelligt werden kann. Wird beispielsweise der beschädigte Bereich eines Formkörpers durch einen Austauschformkörper ersetzt, so wird der beschädigte Formkörperbereich aus dem Verbund herausgetrennt. Der Kanal 18 wird an den hierdurch gebildeten Trennstellen des Formkörpers ebenfalls durchtrennt. Die Kanalstücke im verbliebenen Formkörperverbund werden mit einer Kühlvorrichtung verbunden. Das Kanalstück im Bereich des herausgetrennten Formkörpersbereichs wird mit einer Heizvorrichtung verbunden und als Temperierkanal beim Fügeschäumen für den Austauschformkörper genutzt. Alternativ kann auch ein neuer Temperierkanal in dem Fügebereich für den Austauschformkörper angeordnet werden. Zum Fügeschäumen wird von der Heizvorrichtung ein Heizfluid zum Temperierkanal für den Austauschformkörper hingeleitet und nach Durchfluss wieder zur Heizvorrichtung abgeleitet. Der Temperierkanal für den Austauschformkörpers bildet auf diese Weise ein Verbindungsstück im Kreislauf eines Heizfluids. Zum Schutz vor übermäßigem Hitzeeintrag dienen die verbliebenen Temperierkanäle 18 der Formkörperbereiche, die an den Austauschformkörper angrenzen, als Verbindungskanäle in einem Kühlkreislauf. Auf diese Weise wird bei einer Reparatur die Temperatur des Metallschaummaterials im Fügebereich des Ausrauschformkörpers und daran angrenzend gesteuert.

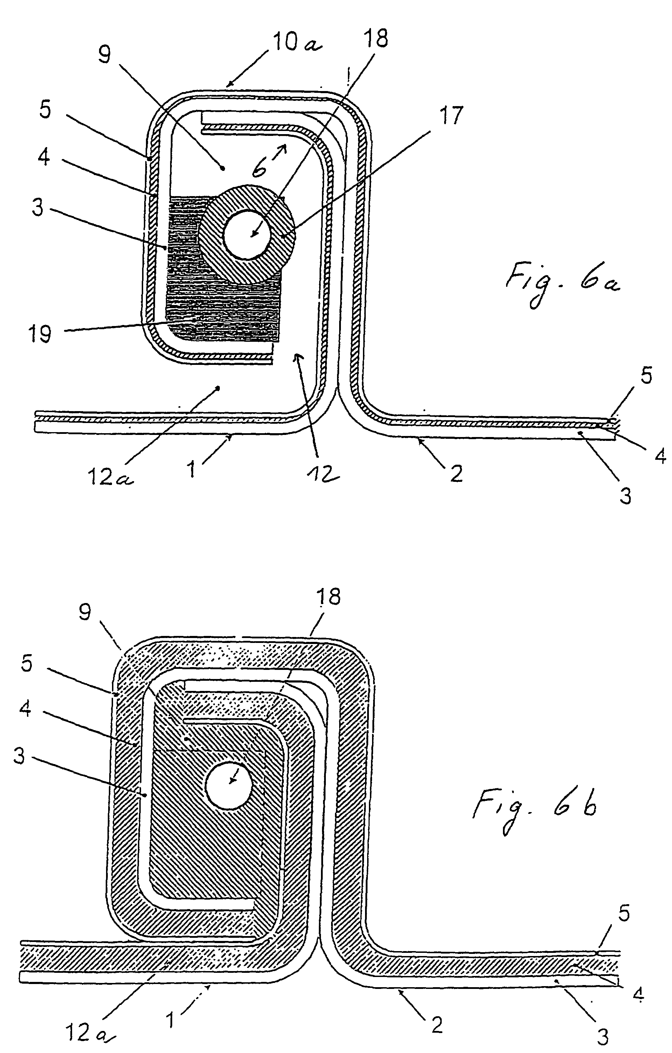

In Fig. 6a und 6b ist ein Formkörperverbund vor und nach dem Aufschäumen dargestellt, bei dem die Formkörper 1 und 2 selbst eine Fügeklammer 10a bilden. Es wird keine separate Fügeklammer benötigt. Die Formkörper 1 und 2 sind aus aufschäumbarem Plattenmaterial 4 mit einer unteren und einer oberen vollmetallischen Deckschicht 3 und 5 gefertigt. Die Deckschicht 5, zu deren Fläche hin sich das Material der Aufschäumschicht 4 während des Aufschäumens idealerweise in Richtung der Flächennormalen ausdehnen soll, ist dünner und somit flexibler als die gegenüberliegende Deckschicht 3. Die dickere Deckschicht 3 ist ausreichend stabil ausgelegt, so dass sie die angebördelte Form der Formkörperränder, d.h. die Form der Anschlussproflle, während des Aufschäumens beibehält. Soweit erforderlich, werden die Formkörper 1 und 2 von außen während des Aufschäumvorgangs zueinander zusätzlich fixiert.

Die Formkörper 1 und 2 sind an der Verbundstelle bzw. im Fügebereich so geformt, dass zwischen ihnen durch das Aufschäumen eine form-, kraft- und stoffschlüssige Verbindung entsteht. Im Ausführungsbeispiel 6a wird dies durch eine hakenförmige Bördelung der Formkörper 1 und 2 gewährleistet. Das Anschlussprofil 6 des Formkörpers 1 ist wieder zu einem Haken, zweifach um jeweils 90°, gebogen. Das Anschlussprofil 6 des zweiten Formkörpers 2 umgreift diesen Haken. Es ist so gebogen bzw. umgekantet, dass eine hohlzylindrische Fügeklammer 10a mit einer Öffnung 12 zum Einführen des Anschlussprofils 6 des Formkörpers 1 gebildet wird. In seinem Fügebereich und unmittelbar daran anschließend weist der zweite Formkörper 2 die Form eines Fragezeichens" auf. Die vorgeformten Formkörper 1 und 2 können so ineinander verhakt werden.

In den von den Formkörpern 1 und 2 eingeschlossenen Raum 9 sind aufschäumbare Ergänzungsprofile 17 engelegt, um ein vollständiges Ausschäumen des Raums 9 zu gewährleisten. Die Ergänzungsprofile 17 sind auf einem Temperierkanal 18 aufgefädelt und werden durch Abstandshalter 19 in Position gehalten.

Fig. 6b zeigt die Fügeverbindung nach dem Aufschäumen. Während des Aufschäumens hat eine Volumenausdehnung der Formkörper 1 und 2 stattgefunden, vorzugsweise senkrecht zu der dünneren Deckschicht 5. Dadurch haben sich die beiden Formkörper 1 und 2 an einem vor dem Aufschäumen offenen Spalt 12a zwischen einander zugewandten Deckschichten 5 aufeinander zu ausgedehnt und diesen Spalt 12a geschlossen. Das aufgeschäumte Ergänzungsprofil 17 hat den geschlossenen Raum 9 vollständig ausgefüllt, und die Formkörper gegeneinander verpresst.

Fig. 6c und 6d zeigen die für die Fig. 6a und 6b beschriebene Fügeverbindung, jedoch mit dem Unterschied, dass je das die dünnere Deckschicht 5 bildende Deckblech der Formkörper 1 und 2 mit Stauchungsfugen 20a und Dehnungsfugen 20b versehen ist, um ein ungehindertes Aufschäumen besser zu gewährleisten. Dies kann erforderlich werden, wenn die dünneren Deckschichten 5 nicht flexibel genug sind, um einen ungehinderten Aufschäumvorgang zu gewährleisten, beispielsweise aufgrund ihrer Dicke. Zur Ausbildung der Stauchungs- und Dehnungsfugen 20a und 20b sind die Deckschischten 5 im Umkant- bzw. Biegebereich jeweils unmittelbar am Ende und Anfang jedes Radius mit durchgehenden Schlitzen versehen. Die Breite der Schlitze ist dem zu erwartenden Aufschäumungsgrad und der Aufschäumungsrichtung angepasst, so dass sich die an die Fugen 20a und 20b grenzenden Blechstreifen während des Aufschäumens nicht behindern können. Aus diesem Grund sind die Stauchungsfugen 20a breiter gewählt als die Dehnungsfugen 20b, da sich hier die Deckbleche 5 vom jeweiligen Formkörper in Richtung seines freien Endes gesehen in Richtung Radiusanfang bewegen und deshalb ein größerer Spielraum vorteilhaft ist.

Mit Ausnahme der Wirkungsweise der Fugen 20a und 20b gelten in Bezug auf Fig. 6d die zu Fig. 6b gemachten Ausführungen. Durch den Aufschäumvorgang hat sich die Breite der Stauchungsfugen 20a verkleinert, da sich die einzelne Blechstreifen in Richtung Radiusanfang bewegt haben. Die Breite der Dehnungsfugen 20b hat sich vergrößert, da sich die Blechstreifen nach außen zu den freien Enden bewegt haben.

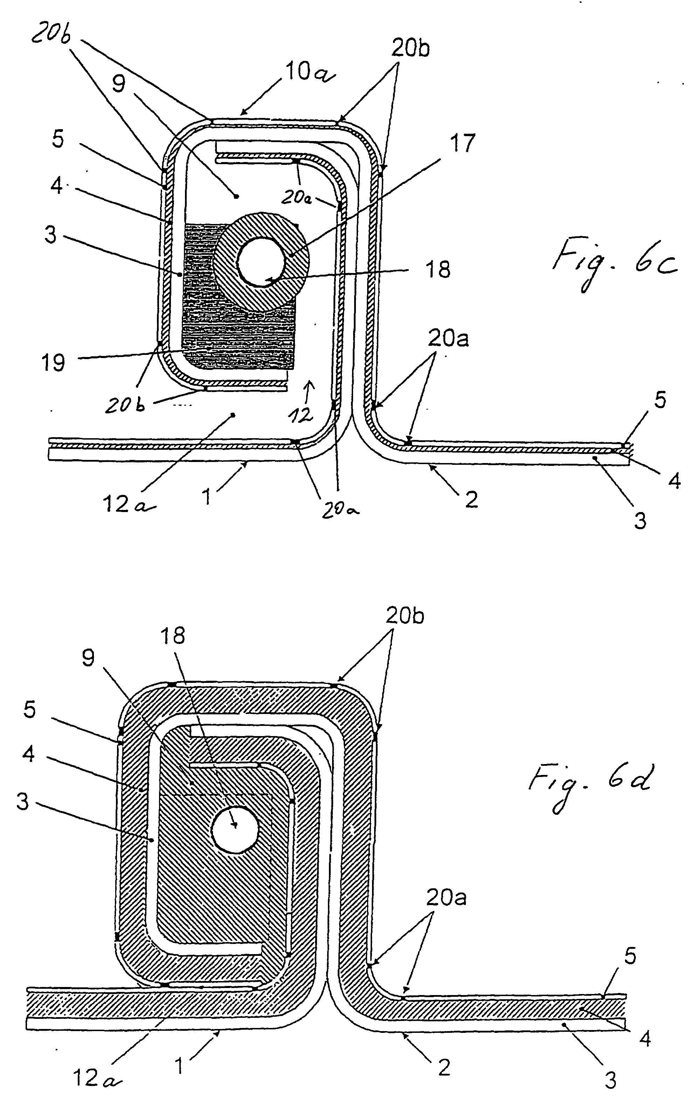

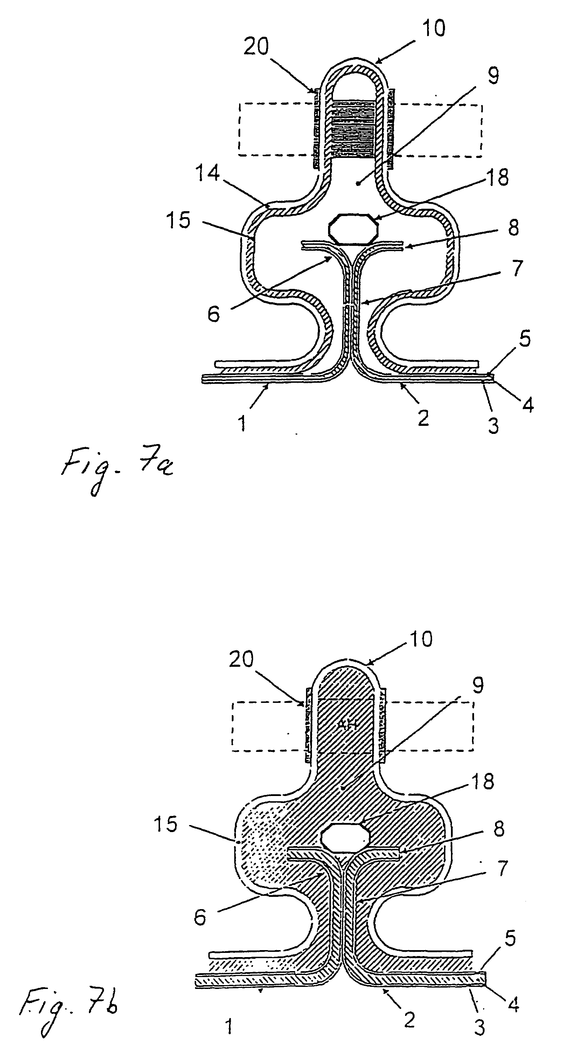

Die Fig. 7a und 7b zeigen eine Fügeverbindung zweier Formkörper 1 und 2 mit einem eingefügten Montage- bzw. Aufnahmemittel 20. Die Formkörper 1 und 2 bestehen wie in den vorher beschriebenen Anwendungsbeispielen je aus einer oberen und einer unteren vollmetallischen Deckschicht 3 und 5 und einer mittleren Aufschäumschicht 4. Ähnlich wie in den Fig. 1a - 4b ist an den Formkörpern 1 und 2 jeweils ein Anschlussprofil 6 geformt, um einen besonders sicheren Pressverbund zu erhalten.

Die Fügeklammer 10 ist aus einer vollmetallischen Deckschicht 14 und einer Aufschäumschicht 15 aufgebaut und so geformt, dass das Montagemittel, im Ausführungsbeispiel eine Hülse 20, quer zur Längsachse der Fügeklammer 10 eingebaut werden kann. Die Hülse 20 kann aus zwei ineinander zu verschraubenden oder klemmenden Hälften aufgebaut sein. Ebenso können für diesen Zweck Niethülsen oder ähnliche Verbindungselemente verwendet werden. Dabei sollte darauf geachtet werden, dass die Hülse 20 aus einem Material gefertigt ist, das keine negativen Auswirkungen auf die Fügeklammer 10 hat, z.B. durch Kontaktkorrosion mit dem Fügeklammermaterial. Zum Einbau der Hülse 20 ist die Fügeklammer 10 mit einer durchgehenden Bohrung versehen, die in Form und Größe dem Außendurchmesser der Hülse 20 entspricht und quer zur Längsachse der Fügeklammer liegt. Diese Bohrung kann durch herkömmliche Verfahren, z.B. durch Bohren oder Stanzen hergestellt werden.

Fig. 7b zeigt die Fügeverbindung nach dem Aufschäumen. Der Hohlraum 9 ist vollständig mit Schaummaterial ausgefüllt, wobei die zusätzlich eingebaute Hülse 20 vollständig umschäumt und so, form- und kraftschlüssig fest in die Fügeklammer eingebunden ist. Auch wäre es möglich, eine Öffnung während des Aufschäumens durch einen Stift freizuhalten, der aus einem Material mit höherer Schmelztemperatur als der zum Aufschäumen benötigten Temperatur besteht und die Eigenschaft aufweist, keine stoffschlüssige Verbindung mit dem Schaummaterial einzugehen. Nach dem vollständigen Abschluss des Aufschäums wird der Stift wieder herausgezogen und so eine Befestigungöffnung erhalten. Das aufgeschäumte Metallschaummaterial würde in diesem Fall den eingelegten Stift umschäumen und nach dem Abkühlen und Herausziehen des Stifts eine Öffnung mit geschlossener Oberfläche zurücklassen.

Der Temperierkanal 18 dient zum schnellen Abkühlen des Metallschaums nach dem Aufschäumen. Dabei wird ein Kühlfluid durch den Temperierkanal 18 geführt. Die Fügeverbindung kann, falls notwendig, zusätzlich von außen mit geeigneten Medien, z.B. durch einen kalten Luftstrom, abgekühlt werden.

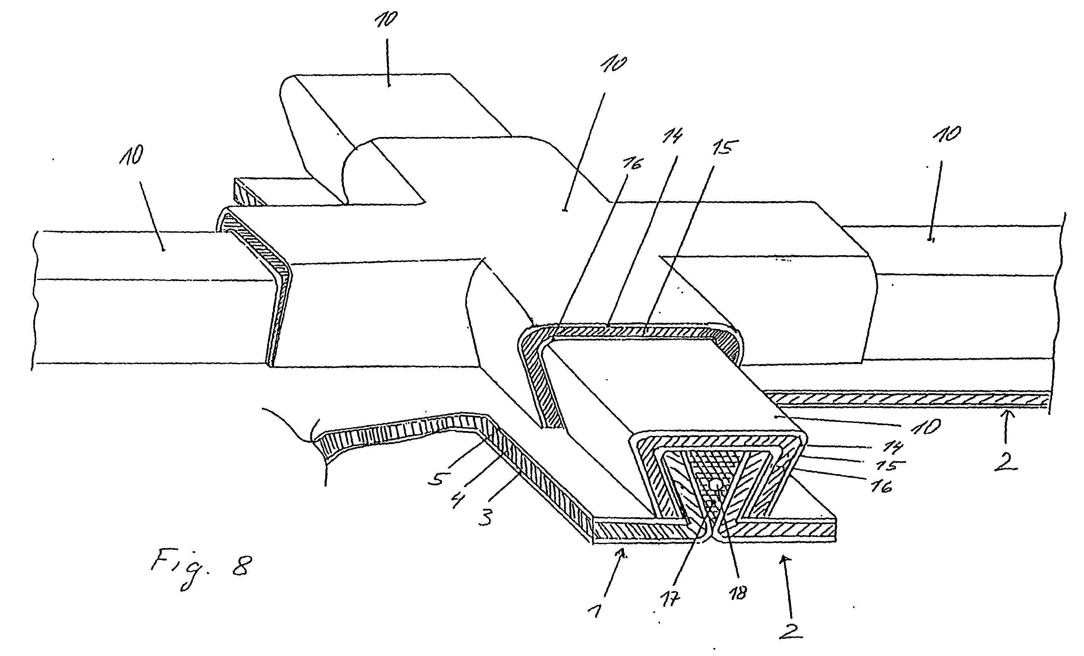

Figur 8 zeigt einen Kreuzverbund von vier Formkörpern 1 und 2. Zwischen aneinander liegenden Paaren der Formkörper 1 und 2 besteht je die Fügeverbindung der Figuren 5a und 5b. Es wird die in den Figuren 5a und 5b beschriebene Fügeklammer 10 zur Herstellung jeder dieser Fügeverbindungen verwendet. In Bezug auf die paarweise Verbindung von Formkörpern 1 und 2 wird daher auf die Beschreibung dieses Ausführungsbeispiels verwiesen.

In Figur 8 sind vier Verbundformkörper 1, 2, 10 in einem gemeinsamen Kreuzpunkt in Längsrichtung ihrer Fügebereiche senkrecht aufeinander zu weisend ausgerichtet und in dieser für den dargestellten Kreuzverbund gewünschten relativen Lage zueinander fixiert.

Eine kreuzförmige Fügeklammer 10 erfüllt die Funktion einer Überwurfklammer. Die Überwurfklammer 10 ist einstückig ausgebildet mit vier senkrecht zueinander stehenden Klammerschenkeln, die von einem Klammermittelbereich abstehen. Die Überwurfklammer kann auch aus mehreren Fügeklammern der Figuren 5a und 5b zusammengesetzt sein, die beispielsweise miteinander verschweißt sind. Jeder der Schenkel der Überwurfklammer 10 weist im Querschnitt die Form der Fügeklammer 10 des Ausführungsbeispiels der Figuren 5a und 5b auf. Die Überwurfklammer 10 ist dreischichtig mit vollmetallischen äußeren Deckschichten 14 und 16 und einer inneren Schicht 15 aus einem aufgeschäumten Metallschaummaterial. Die Deckschichten 14 und 16 und die mittlere Schicht 15 der Überwurfklammer 10 bestehen aus den gleichen Materialien wie die Deckschichten 14 und 16 und die Schaummaterialschichten 15 der weiteren Fügeklammern 10 für die paarweisen Verbindungen von Formkörpern 1 und 2.

Die Überwurfklammer 10 könnte auch zweischichtig nur mit einer äußeren, vollmetallischen Deckschicht und einer Aufschäumschicht in der Art der Fügeklammern der Figuren 1a bis 4b ausgebildet sein. Das in diesem Fall aufschäumbare Metallschaummaterial 15 der Überwurfklammer 10 wird durch das gleiche Material wie die Ergänzungsprofile 17 gebildet. Es wäre auch möglich, bei Ausbilden der Schicht 15 als Aufschäumschicht 15 ein Material mit niedrigerer Aufschäumtemperatur zu verwenden, was dann vorteilhaft sein kann, wenn die paarweisen Fügeverbindungen bereits geschäumt sind bevor das Aufschäumen für die Überwurfklammer 10 durchgeführt wird. Für den Fall, dass die Schicht 15 eine Aufschäumschicht ist, ist es wegen der Temperierkanäle 18 vorteilhafterweise aber auch möglich, bei dem Aufschäumen der Überwurfklammer 10 die Fügebereiche der paarweisen Fügeverbindungen mittels der Temperierkanäle 18 bis in den Bereich der Überwurfklammer 10 hinein zu kühlen, um einem erneuten Aufschäumen vorzubeugen. Es wären lediglich die Temperierkanäle 18 an ihren offenen Stirnseiten mit einer Kühleinrichtung zum Durchleiten eines Kühlfluids zu verbinden.

Figur 8 zeigt den Kreuzverbund nach dem Fügeschäumen. Für das Aufschäumen werden zuvor die Formkörper 1 und 2 zusammengelegt, die Fügeklammern 10 in den Fügebereichen darüber gestülpt oder längsseits aufgeschoben und die Temperierkanäle 18 mit den aufgefädelten Ergänzungsprofilen 17 eingeschoben. Die Ergänzungsprofile 17 sind aus dem Metallschaummaterial der Schicht 15 der Überwurfklammer 10 hergestellt. Anschließend werden die derart bereits verklammerten Formkörper 1, 2 in der in Figur 8 gezeigten Lage fixiert und die Überwurfklammer 10 die vier Fügeklammern 10 übergreifend aufgepresst. Alternativ zu der vorbeschriebenen Vorgehensweise können auch zunächst die vier Formkörper 1, 2 in der im Kreuzverbund gewünschten Lage zueinander ausgerichtet und fixiert und unmittelbar auf die Formkörper 1 und 2 die Überwurfklammer 10 aufgesetzt werden. Die Fügeklammern 10 zum Verbinden von jeweils zwei aneinander grenzenden Formkörpern 1 und 2 werden bei dieser Art des Verbindungsaufbaus auf die Anschlussprofile der Formkörper 1 und 2 längs aufgeschoben und in die Überwurfklammer 10 eingeschoben, gegebenenfalls schiebend in die Überwurfklammer 10 hineingepresst. Anschließend wird der formschlüssig zusammengehaltene Kreuzverbund in einen Ofen verbracht und auf die Aufschäumtemperatur des Metallschaummaterials erwärmt. Durch das Aufschäumen wird in einem einzigen Aufschäumschritt der feste Verbund zwischen den einzelnen Formkörperpaaren 1 und 2 und zwischen der Überwurfklammer 10 und den Fügeklammern 10 im Kreuzpunkt hergestellt.

Falls der Verbund der Formkörper 1, 2 die Größe des Ofens bzw. von herkömmlichen Öfen übersteigt, schafft der wenigstens eine Temperierkanal 18 auch die Möglichkeit, das Aufschäumen allein durch eine Innentemperierung, nämlich Innenheizung, jedes der Fügebereiche zu bewerkstelligen. Mindestens ein Temperierkanal 18 durchzieht jeden der Fügebereiche der aneinander grenzenden Formkörper 1 und 2. Falls es sich bei der Überwurfklammer 10 um eine Klammer mit aufschäumbarem Metallschaummaterial handelt, kann ein Temperierkanal oder können mehrere Temperierkanäle auch in einem dann vorhandenen Zwischenbereich zwischen den vier Fügeklammern 10 und der daraufsitzenden Überwurfklammer 10 angeordnet sein.

Die Innentemperierung kann die einzige Möglichkeit der Aufheizung zum Aufschäumen des Metallschaummaterials im Fügebereich bilden.

Die Figuren 9a, 9b, 9c zeigen strukturierte Bleche 19a, 19b und 19c, aus denen die in den vorherigen Ausführungsbeispielen verwendeten Abstandshalter 19 hergestellt sein können, beispielsweise mittels eines Trennverfahrens. Die Bleche 19a, 19b und 19c sind aus einem Material gefertigt, das eine ausreichend höhere Schmelztemperatur als die zum Aufschäumen benötigte Temperatur aufweist. Die als Halbzeuge planen Bleche 19a, 19b und 19c werden zur Oberflächenstrukturierung mittels eines entsprechenden Werkzeugs gleichmäßig mit Ausbuchtungen bzw. Taschen 21a, 21b und 21c versehen. Vorzugsweise erfolgt die Strukturierung mittels Prägen in einem Prägewerkzeug.

Die Taschen 21a, 21b und 21c sind regelmäßige Polyeder, Kegel oder Kegelstümpfe. Die begrenzenden Seitenflächen der Taschen laufen je unter einem Winkel von 120° zum Grund jeder Tasche aufeinander zu. Die Taschen 21a, 21b und 21c sind an ihrem Grund flach abgestumpft. Sie können am Grund geschlossen sein oder offen. Durch den im letzteren Fall offenen Grund solch einer Tasche kann ein Temperierkanal hindurchgeführt werden.

Die Taschen jedes der Bleche 19a, 19b und 19c sind in Reihen, die in zwei zueinander senkrechten Richtungen je parallel verlaufen, dichtest gepackt nebeneinander angeordnet. In jeder der Reihen grenzen an jede Tasche, die in eine Richtung normal zur Oberfläche des Blechs vor der Strukturierung zu ihrem Grund hin sich verjüngt, Taschen, die zu ihrem Grund hin sich in die entgegengesetzte Normalenrichtung verjüngt. Die Taschen alternieren somit in Bezug auf die Verjüngungsrichtung in jeder Reihe und der dazu jeweils senkrechten Reihe. Die ist in den Seitenansicht und den Querschnitten A-A und B-B zu jeder Fig. 9a, 9b und 9c zu erkennen.

Das Volumen jeder einzelnen Tasche beträgt die Hälfte der zu erwartenden durchschnittlichen Größe einer Schaumblase des beim Fügeschäumen aufzuschäumenden Materials. Als Volumen wird hierbei der Raum verstanden, der von den begrenzenden Seitenflächen jeder Tasche und den die Ränder der Seitenflächen verbindenden, plan gedachten Deckflächen eingeschlossen wird.

Fig. 9d zeigt einen aus einem Blechstreifen geformten Abstandshalter 19d, der zackenförmig gebogen ist, wobei die Blechabschnitte zu jedem Zacken in einem Winkel von 120° aufeinander zu weisen. Die Zacken bilden quer zum Blechstreifen offene Taschen 21d. Der Abstandshalter 19d ist an einem Ende so gebogen, dass er an einem Temperierkanal 18 klemmend befestigt werden kann. Hierfür ist der Blechanfang zu einer kreisförmigen Hülse 22 gebogen, die einen Innendurchmesser aufweist, der geringfügig kleiner als ein Außendurchmesser des Temperierkanals ist.

Um den Abstandshalter 19d auf den Temperierkanal aufzuschieben, wird die Hülse 22 um ein entsprechendes Stück im elastischen Bereich aufgeweitet und dann in die gewünschte Position aufgeschoben und klemmt so auf dem Temperierkanal. Die Halterhülse 22 kann auch zwischen den Enden des Blechstreifens, insbesondere in der Mitte, ausgebildet sein, um einen Abstandshalter gleich nach zwei Seiten zu erhalten.

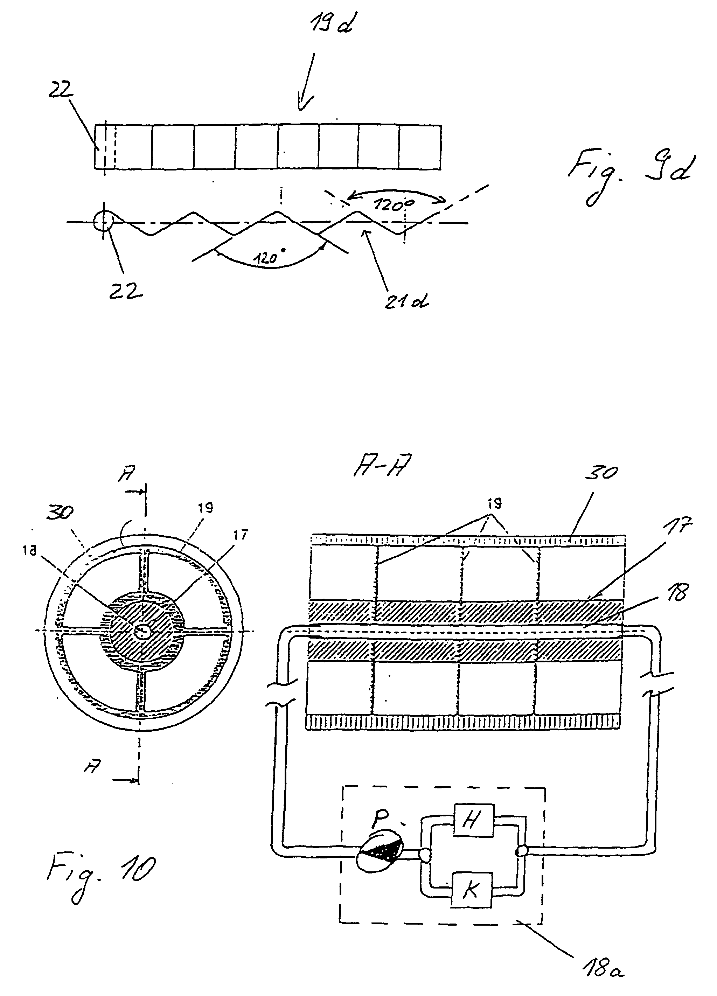

In Fig. 10 ist ein zum Ausschäumen vorbereitetes Hohlzylinderprofil 30 in einem Querschnitt und einem Längsschnitt A-A dargestellt. Das Hohlzylinderprofil 30 wird durch ein einfaches, kreisrundes Rohr mit einem einschichtigen Hohlzylindermantel aus einem metallischen Material gebildet. Zur Erhöhung der Knickfestigkeit und Biegesteifigkeit wird das Hohlzylinderprofil 30 mit einem Metallschaummaterial ausgeschäumt. Figur 10 zeigt das Hohlzylinderprofil 30 unmittelbar vor dem Ausschäumen. Hierfür wurde zuvor ein Temperierkanal 18 in Form eines im Vergleich zum Hohlzylinderprofil 30 dünnen Rohrs zentral in das Hohlzylinderprofil 30 eingeschoben. Der Temperierkanal 18 wird mittels radial von ihm abstehenden Abstandshaltern 19 in seiner konzentrischen Lage zum Hohlzylinderprofil 30 gehalten. In dieser Lage durchragt er das Hohlzylinderprofil 30.

Die Abstandshalter 19 werden durch Abstandshalterringe gebildet, die längs des Temperierkanals 18 in regelmäßigen Abständen angeordnet sind und den Temperierkanal 18 in seiner konzentrischen Lage zum Hohlzylinderprofil 30 halten. Zwischen den Abstandshaltern 19 sind Ergänzungsprofile 17 aus einem aufschäumbaren Metallschaummaterial auf dem Temperierkanal 18 aufgefädelt. Die Abstandshalter 19 sind mit dem Temperierkanal 18 gut wärmeleitend verbunden, so dass Sie als Temperierflächen zusätzlich zur derjenigen des Rohrmantels des Temperierkanals 18 wirken.

Die Abstandshalter 19 der Figur 10 werden je durch zwei plane, dünne, schmale, konzentrische Kreisringplatten mit radialen Verbindungsstegen gebildet. Stattdessen könnten auch aus den Abstandshalterblechen der Figuren 9a bis c gefertigte strukturierte Bleche verwendet werden, durch die zentral der Strömungskanal 18 geführt und deren äußerer Umfangsrand dem Innenquerschnitt des Hohlzylinderprofils 30 angepasst wird. Es könnten auch die Blechstreifen 19d der Figur 9d als Abstandshalter 19 verwendet werden, indem sie entlang des Temperierkanals 18 in einer Anzahl aufgeschoben werden, die zur gewünschten Positionierung des Strömungskanals 18 ausreicht.

An seinen offenen Stirnseiten ist der Temperierkanal 18 an eine Temperiereinrichtung 18a angeschlossen. Die Temperiereinrichtung 18a besteht im wesentlichen aus einem Heizer H und einem im Temperierkreislauf dazu parallel angeordneten Kühler K sowie einer Pumpe P. Das Temperierfluid wird in dem geschlossenen Temperierkreislauf von der Pumpe P durch eine entsprechende Rohrleitung zum Temperierkanal 18, durch den Temperierkanal 18 hindurch und über eine entsprechende Rohrleitung zu dem Heizer H oder dem Kühler K gefördert. Mittels einer Ventilsteuerung erfolgt der Kreislauf wahlweise über den Heizer H oder den Kühler K. Auf diese Weise wird eine auf das Hohlzylinderprofil 30 bei dem Aufschäumen wirkende äußere Heizung durch eine Innenheizung unterstützt. Zum kontrollierten Beenden des Aufschäumens schaltet die Temperiereinrichtung 18a von Heizen auf Kühlen um, so dass der zu diesem Zeitpunkt ausgeschäumte Innenraum des Hohlzylinderprofils 30 von innen aktiv gekühlt wird. Aufgrund der Innenheizung beim Aufschäumen kann die von außen einzutragende Wärmeenergie gegenüber einem ohne Innenheizung ausgeschäumten Hohlzylinderprofil 30 verringert werden. Vorteilhaft ist zusätzlich, dass genau derjenige Aufschäumbereich im Inneren des Hohlzylinderprofils 30 lokal erhitzt wird, der mittels eines Wärmeeintrags von außen wegen der isolierenden Wirkung des aufgeschäumten Schaummaterials zuletzt auf die für das Aufschäumen erforderliche Temperatur gebracht würde, nun unmittelbar von innen heraus erhitzt wird. Es kann hierdurch eine gleichmäßigere Porenstruktur des aufgeschäumten Schaummaterials im Inneren des Hohlzylinderprofils 30 erzielt werden.

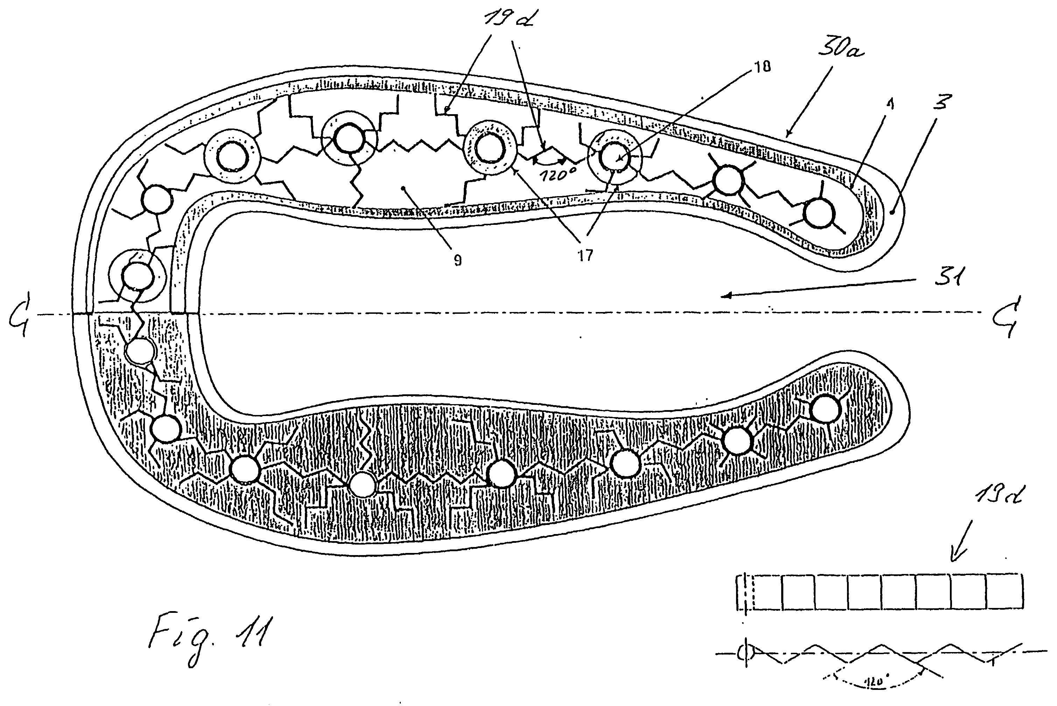

Fig. 11 zeigt ein im Querschnitt hufeisenförmiges Hohlprofil 30a aus Leichtmetall für einen Mast einer Segeljacht. Der durch die Hufeisenform erhaltene Innenraum 31 des Hohlprofils 30a dient als Aufnahme für ein aufrollbares Segel. Das Hohlprofil 30a weist einen allseitig umschlossenen Hohlraum 9 auf. Zur Versteifung des Hohlprofils 30a wird der Hohlraum 9 mit einem Metallschaummaterial ausgeschäumt.

In einem Bereich zu einer Seite einer Mittellängsebene C-C ist das Hohlprofil 30a unmittelbar vor einem Aufschäumen und in dem Bereich zur anderen Seite der Mittellängsebene C-C nach dem Aufschäumen dargestellt.

Das Hohlprofil 30a wird aus einem Plattenhalbzeug in die Hufeisenform kaltverformt. Dabei wird gleichzeitig auch der umschlossene Hohlraum 9 gebildet. Als Plattenhalbzeug dient ein beispielsweise mittels Strangpressen, insbesondere mittels hydrostatischem Strangpressen, erhaltener Schlichtverbundwerkstoff bestehend aus einer vollmetallischen Deckschicht 3 und einer Schicht 4 aus einem mit dem Deckschichtmaterial metallurgisch verträglichen, aufschäumbaren Metallschaummaterial. Die Deckschicht 3 umhüllt nach dem Formen des Hohlprofils 30 die dann innenliegende Aufschäumschicht 4. Die nach dem Formen aneinander stoßenden Enden des Plattenhalbzeugs können vorteilhafterweise mittels der vorstehend beschriebenen Fügeverbindung fest miteinander verbunden sein. Andere Verbindungen sollen jedoch nicht ausgeschlossen sein, bespielsweise eine Schweißverbindung.

Im nächsten Schritt werden in den langgestreckten, hufeisenförmigen Hohlraum 9 als Röhrchen ausgebildete Temperierkanäle 18 eingeschoben. Auf den Temperierkanälen 18 sind je mehrere der Abstandshalter 19d der Fig. 9d aufgeklemmt. Einige der Abstandshalter 19d sind an beiden Enden mit Klemmhülsen 22 versehen und gleichzeitig auf benachbarte Paare von Temperierkanälen 18 geklemmt. Es wird so ein zusammenhängendes Temperiergebilde erhalten, dass aufgrund seiner Flexibilität beliebigen Hohlraumformen anpassbar ist. Die Abstandshalter 19d halten die Temperierkanäle 18 im Hohlraum 9 an den gewünschten Positionen. Die Temperierkanäle 18 sind an denjenigen Stellen mit Ergänzungsprofilen 17 aus aufschäumbarem Metallschaummaterial umgeben, wo die Aufschäumschicht 4 des Hohlprofils 30 nicht ausreicht ist, um den Hohlraum 9 völlig auszuschäumen. Die Ergänzungsprofile 17 sind nach der schon in vorherigen Anwendungsbeispielen beschriebenen Schaschlikmethode" abwechselnd mit Abstandshaltern 19d auf die Temperierkanäle 18 aufgefädelt.

Zum Aufschäumen wird das Hohlprofil 30 in einem Ofen verbracht. Die Temperierkanäle 18 dienen zum Durchleiten eines Kühlfluids zum kontrollierten Beenden des Aufschäumens. Es kann mittels der Kanäle 18 unterstützend zum Wärmeeintrag von außen auch Wärme von innen in das Schaummaterial eingetragen werden, um ein gleichmäßigeres oder auch nur rascheres Aufschäumen zu ermöglichen. Es kann der Wärmeeintrag zum Aufschäumen auch allein mittels der Temperierkanäle erfolgen und so auf einen Ofen gänzlich verzichtet werden.

Der untere Teil des Querschnitts in Fig. 11 zeigt das Hohlprofil 30 nach dem Aufschäumvorgang. Der Hohlraum 9 ist vollständig und gleichmäßig mit dem aufgeschäumten Schaummaterial ausgefüllt. Durch das Ausschäumen wird eine wesentliche Erhöhung der Festigkeit des Hohlprofils 30 erreicht. Insbesondere die Knickfestigkeit und Biegesteifigkeit werden im Vergleich zu einem nicht ausgeschäumten Hohlprofil aus gleichem Material und gleichem Gewicht wesentlich verbessert.

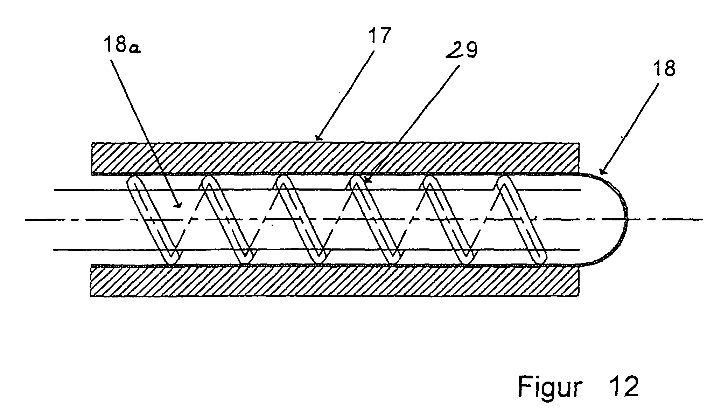

Fig. 12 zeigt in einem Längsschnitt ein aus zwei ineinanderliegenden Strömungskanälen 18 und 18a bestehendes Strömungskanalpaar, das in einem Bereich mit Metallschaummaterial 17 angeordnet ist. Der Bereich mit dem Metallschaummaterial 17 kann der Fügebereich innerhalb der in vorstehenden Ausführungsbeispielen beschriebenen Fügeklammer oder ein sonstiger auszuschäumender Bereich, beispielsweise das Hohlprofil des Ausführungsbeispiels der Figur 11 sein.

Das Strömungskanalpaar wird durch einen äußeren Strömungskanal 18 und einen darin konzentrisch gelagerten inneren Strömungskanal 18a gebildet. Der äußere Strömungskanal 18 steht in direktem Kontakt zu dem umgebenden Metallschaummaterial 17. Der äußere Strömungskanal 18 ist an einem Ende geschlossen, d.h. er ist als Sackkanal ausgebildet. An seinem offenen anderen Ende ist der äußere Strömungskanal 18 an eine Temperiereinrichtung angeschlossen. Durch das offene Ende ragt der innere Strömungskanal 18a in den äußeren Strömungskanal 18 hinein und reicht bis nahe an dessen geschlossenes Ende heran. Zwischen dem inneren Strömungskanal 18a und dem äußeren Strömungskanal 18 verbleibt über die gesamte Länge, mit der der innere Strömungskanal 18a in den äußeren Strömungskanal 18 hineinreicht, ein Ringspalt. Um diesen Ringspalt zu erhalten, ist der innere Strömungskanal 18a mit einem Band 29 aus einem Fasermaterial, beispielsweise einem Kohlefaserverbundmaterial, spiralig umschlungen. Das Band 29 erfüllt die zwei Funktionen der Lagerung des inneren Strömungskanals 18a in dem äußeren Strömungskanal 18 und der Herstellung eines möglichst guten Wärmeübergangs von der äußeren Mantelfläche des inneren Strömungskanals 18a auf die innere Mantelfläche des äußeren Strömungskanals 18. Zu diesem Zweck sind in das temperaturbeständige Grundmaterial des Bands 29 Fasern eines weiteren Materials eingewebt, das eine gegenüber dem Grundmaterial hohe Wärmeleitfähigkeit besitzt. Das Grundmaterial kann beispielsweise durch Kohlefasern und das demgegenüber besser wärmeleitende Material durch ein metallisches Material gebildet werden. Eine dritte Funktion erfüllt das Band 29 durch die spiralige Aufwicklung auf dem inneren Strömungskanal 18a. Durch das spiralige Aufwickeln des Bands 29 entsteht in dem Ringraum zwischen den beiden Kanälen 18a und 18 ein spiralenförmiger bzw. gewindeförmiger Rückströmkanal für das Temperierfluid. Das Temperierfluid wird durch das spiralige Aufwickeln des Bands 29 auf dem inneren Strömungskanal 18a auf einem hierdurch verlängerten Strömungsweg zur Temperiereinrichtung zurückgeführt und insbesondere verwirbelt, so dass eine turbulente Rückströmung mit einer gegenüber einer laminaren Rückströmung erhöhten Wärmeübertragung durch den Ringspalt hindurch stattfindet.

Zum Aufschäumen des Metallschaummaterials 17 wird von der Temperiereinrichtung heißes Temperierfluid durch den inneren Strömungskanal 18a eingeleitet. Das eingeleitete Temperierfluid durchströmt den inneren Strömungskanal 18a bis zu dessen vorderen Ende, umströmt die vordere Kante des inneren Strömungskanals 18a nach außen und strömt im gewindeförmigen Rückströmkanal durch das Band 29 geführt, mehrfach um den inneren Strömungskanal 18 herum wieder zurück zur Temperiereinrichtung. Das rückströmende Temperierfluid heizt das Metallschaummaterial 17 bis auf Aufschäumtemperatur, gegebenenfalls ein Stück darüber, auf. Durch den Wärmetausch im Gegenstrom wird im außen strömenden Temperierfluid eine besonders gleichmäßige Temperatur eingestellt. Entsprechend gleichmäßig ist der Aufschäumvorgang des Metallschaummaterials 17.

Die Innentemperierung wird erfindungsgemäß nicht nur zum Aufheizen des Metallschaummaterials 17, sondern auch zum kontrollierten Beenden des Aufschäumens sowie vorzugsweise auch zum kontrollierten Abkühlen des aufgeschäumten Materials verwendet. Hierfür wird die Temperatur des außen strömenden Temperierfluids nach Verlassen des Bereichs mit dem Metallschaummaterial 17 gemessen. Die Messung erfolgt vorzugsweise mittels eines Temperatursensors, der in dem Rückströmkanal angeordnet ist. Der Sensor kann in dem Teil des Rückströmkanals angeordnet sein, der in dem Aufschäumbereich liegt und so die Temperatur des Temperierfluids unmittelbar im Bereich des Aufschäumens messen. Er kann jedoch auch in einem außerhalb des Aufschäumbereichs liegenden Teil des Rückströmkanals angeordnet sein. Wird das Temperierfluid in einem Kreislauf geführt, so kann solch ein Temperatursensor auch an jeder anderen geeigneten Stelle im Kreislauf angeordnet sein, solange hieraus sichere Rückschlüsse auf die Temperatur im Aufschäumbereich gezogen werden können. Das Temperierfluid muss nicht in einem geschlossenen Kreislauf geführt werden, sondern kann auch durch die Temperiereinrichtung erzeugt und nach Durchströmen des inneren Strömungskanals 18a und des äußeren Strömungskanals 18 einfach an die Umgebung abgegeben werden, gegebenenfalls nach einer Reinigung.

Die gemessene Temperatur wird mit einer vorgegebenen Maximaltemperatur verglichen. In Abhängigkeit von dem Vergleich wird der Heizvorgang weitergeführt oder abgebrochen. Wird beispielsweise die vorgegebene Maximaltemperatur erreicht oder über einen vorgegebenen Zeitraum hinweg erreicht oder überschritten, so schaltet die Temperiereinrichtung um von Heizen auf Kühlen. Dies kann beispielsweise in der zum Ausführungsbeispiel der Figur 10 beschriebenen Art erfolgen. Der Kühlvorgang kann bei Erreichen oder Unterschreitung einer vorgegebenen Temperatur, die mit dem gleichen Temperatursensor gemessen werden kann, abgebrochen werden. Der Temperatursensor kann vorteilhafterweise in das Band 29 eingearbeitet sein. Umfasst die Temperiereinrichtung zur Energieerzeugung einen Verbrennungsmotor mit Turbolader, so kann die Innentemperierung dadurch erfolgen, dass als Heizfluid die Abluft des Verbrennungsmotors und als Kühlfluid die Zuluft zu dem Lader verwendet wird. Beim Umschalten wird von der Abluft auf Zuführung der Zuluft umgeschaltet.

## Patentansprüche

1. Metallschaumformkörper mit aufgeschäumtem Metallschaummaterial, durch oder in das wenigstens ein Strömungskanal (18) zur Durchleitung eine Temperierfluids geführt ist, **dadurch gekennzeichnet, dass** der Strömungskanal ein äußerer Strömungskanal (18) ist, der einen inneren Strömungskanal (18a) umgibt, sodass der innere Strömungskanal (18a) und ein zwischen dem inneren Strömungskanal (18a) und dem äußeren Strömungskanal (18) verbleibender Ringspalt je von einem Temperierfluid durchströmbar sind.

2. Metallschaumformkörper nach Anspruch 1, **dadurch gekennzeichnet, dass** der äußerer Strömungskanal (18) perforiert ist.

3. Metallschaumformkörper nach einem der vorhergehenden Ansprüche, **dadurch gekennzeichnet, dass** mit dem äußeren, Strömungskanal (18) wenigstens ein Temperierflächengebilde (19; 19a; 19b; 19c; 19d) wärmeleitend verbunden sind.

4. Metallschaumformkörper nach dem vorhergehenden Anspruch, **dadurch gekennzeichnet, dass** das Temperierflächengebilde (19; 19a; 19b; 19c; 19d) durch ein Blech mit dicht nebeneinander angeordneten Taschen (21a; 21b; 21c; 21d) gebildet wird.

5. Metallschaumformkörper nach einem der vorhergehenden Ansprüche, **dadurch gekennzeichnet, dass** der Metallschaumformkörper (10; 10a; 30; 30a) ein Strukturteil (3, 18) aus einem Material aufweist, das bei einer Aufschäumtemperatur des Metallschaummaterials die Formstabilität des vor dem Aufschäumen geformten Strukturteil (3) gewährleistet.

6. Metallschaumformkörper nach einem der vorhergehenden Ansprüche, **dadurch gekennzeichnet, dass** der äußere Strömungskanal (18) an einem in dem Metallschaummaterial liegenden Ende geschlossen und der innere Strömungskanal (18a) vor dem geschlossenen Ende in den äußeren Strömungskanal (18) mündet.

7. Metallschaumformkörper nach dem vorhergehenden Anspruch, **dadurch gekennzeichnet, dass** der innere Strömungskanal (18a) spiralig mit einem Band (29) umwickelt ist.

8. Metallschaumformkörper nach einem der zwei vorhergehenden Ansprüche, **dadurch gekennzeichnet, dass** der innere und der äußere Strömungskanal (18, 18a) je aus einem hitze- und druckbeständigen Verbundfasermäterial bestehen, in das Fasern eines anderen Materials mit einer im Vergleich zum dem hitze- und druckbeständigen Verbundfasermaterial höheren Wärmeleitfähigkeit eingewirkt sind,

9. Verfahren zum Herstellen eines Metallschaumformkörpers nach wenigstens einem der Ansprüche 1 - 8, bei dem wenigstens in einem Formkörperbereich (9) nach einem Formen des Formkörper (10; 10a; 30; 30a) ein Metallschaummaterial aufgeschäumt wird, **dadurch gekennzeichnet, dass** das Metallschaummaterial bei dem Aufschäumen mittels eines Temperierfluids innentemperiert wird.

10. Verfahren nach dem vorhergehenden Anspruch, **dadurch gekennzeichnet, dass** das Metallschaummaterial mittels der Innentemperierung gekühlt wird.

11. Verfahren nach dem vorhergehenden Anspruch, **dadurch gekennzeichnet, dass** mittels der Innentemperierung ein Aufschäumen des Metallschaummaterials gestoppt oder verhindert wird.

12. Verfahren nach einem der vorhergehenden Ansprüche, **dadurch gekennzeichnet, dass** mittels der Innentemperierung geheizt wird.

13. Verfahren nach wenigstens einem der vorhergehenden Ansprüche, **dadurch gekennzeichnet, dass** in dem Formkörperbereich (9), in dem das Metallschaummaterial aufgeschäumt wird, ein Ergänzungsprofil (17) eingebracht wird, das aufschäumbares Metallschaummaterial umfasst oder durch solches gebildet wird.

14. Verfahren nach wenigstens einem der vorhergehenden Ansprüche, **dadurch gekennzeichnet, dass** das Temperierfluid in zwei ineinanderliegenden Strömungskanälen (18, 18a) im Gegenstrom geführt wird.

15. Verfahren nach einem der vorhergehenden Ansprüche, **dadurch gekennzeichnet, dass** der Strömungskanal oder die mehreren Strömungskanäle nach dem Aufschäumen des Metallschaummaterials mit einem Kunststoffmaterial gefüllt wird bzw. werden.

## Claims

1. A foamed metal preformed body including foamed metal foam material, through or into which at least one flow conduit (18) for communicating a thermal treatment fluid is guided, **characterised in that** said flow conduit is an outer flow conduit (18) surrounding an inner flow conduit (18a), such that said inner flow conduit (18a) and an annular gap remaining between said inner flow conduit (18a) and said outer flow conduit (18) in each case can communicate a thermal treatment fluid.

2. The foamed metal preformed body as set forth in claim 1, **characterised in that** said outer flow conduit (18) is perforated.

3. The foamed metal preformed body as set forth in any one of the preceding claims, **characterised in that** at least one structured thermal treatment sheeting (19; 19a; 19b; 19c; 19d) is thermally conductively connected to said outer flow conduit (18).

4. The foamed metal preformed body as set forth in the preceding claim, **characterised in that** said structured thermal treatment sheeting (19; 19a; 19b; 19c; 19d) is formed by a sheet of metal comprising pockets (21a; 21b; 21c; 21d) densely arranged adjacently.

5. The foamed metal preformed body as set forth in any one of the preceding claims, **characterised in that** said foamed metal preformed body (10; 10a; 30; 30a) comprises a structural part (3, 18) made of a material which, at a foaming temperature of said metal foam material, ensures the dimensional stability of said structural part (3, 18) formed prior to foaming.

6. The foamed metal preformed body as set forth in any one of the preceding claims, **characterised in that** said outer flow conduit (18) is closed off at an end located in said metal foam material, and said inner flow conduit (18a) feeds into said outer flow conduit (18) upstream of said closed end.

7. The foamed metal preformed body as set forth in the preceding claim, **characterised in that** said inner flow conduit (18a) is spirally wrapped with a tape (29).

8. The foamed metal preformed body as set forth in any one of the preceding two claims, **characterised in that** said each of said inner and outer flow conduits (18, 18a) is made of a heat- and pressure-resistant composite fibre material, into which fibres of another material, having a greater thermal conductivity as compared to said heat- and pressure-resistant composite fibre material, are worked.

9. A method for fabricating a foamed metal preformed body as set forth in at least one of claims 1 to 8, wherein after said preformed body (10; 10a; 30; 30a) is formed, a metal foam material is foamed at least in one preformed body zone (9), **characterised in that** during foaming, said metal foam material undergoes internal thermal treatment by means of a thermal treatment fluid.

10. The method as set forth in the preceding claim, **characterised in that** said metal foam material is cooled by means of said internal thermal treatment.

11. The method as set forth in the preceding claim, **characterised in that** foaming of said metal foam material is halted or prevented by means of said internal thermal treatment.

12. The method as set forth in any one of the preceding claims, **characterised in that** said internal thermal treatment is used for heating.

13. The method as set forth in at least one of the preceding claims, **characterised in that** a supplemental section (17) which comprises or is formed by foamable metal foam material is incorporated in the preformed body zone (9) in which said metal foam material is foamed.

14. The method as set forth in at least one of the preceding claims, **characterised in that** said thermal treatment fluid is guided in two nested flow conduits (18, 18a) in counter flow.

15. The method as set forth in any one of the preceding claims, **characterised in that** after said metal foam material is foamed, said flow conduit or number of flow conduits is/are filled with a plastic material.

## Revendications

1. Corps profilé à mousse métallique avec du matériau de mousse métallique expansé, à travers lequel ou dans lequel est guidé au moins un canal d'écoulement (18) pour le transport d'un fluide d'équilibrage de la température, **caractérisé en ce que** le canal d'écoulement est un canal d'écoulement extérieur (18) qui entoure un canal d'écoulement intérieur (18a), ce qui fait que le canal d'écoulement intérieur (18a) et une fente annulaire subsistant entre le canal d'écoulement intérieur (18a) et le canal d'écoulement extérieur (18) peuvent être traversés par un fluide d'équilibrage de température.

2. Corps profilé à mousse métallique selon la revendication 1, **caractérisé en ce que** le canal d'écoulement extérieur (18) est perforé.

3. Corps profilé à mousse métallique selon l'une des revendications précédentes, **caractérisé en ce qu'**au moins une structure à surfaces d'équilibrage de température (19; 19a; 19b; 19c; 19d) est reliée de manière thermiquement conductrice au canal d'écoulement extérieur (18).

4. Corps profilé à mousse métallique selon les revendications précédentes, **caractérisé en ce que** la structure à surfaces d'équilibrage de température (19; 19a; 19b; 19c; 19d) est formée par une tôle avec des poches (21a; 21b; 21c; 21d) disposées tout près les unes à côté des autres.

5. Corps profilé à mousse métallique selon l'une des revendications précédentes, **caractérisé en ce que** le corps profilé à mousse métallique (10; 10a; 30; 30a) comporte une partie de structure (3, 18) constituée d'un matériau qui, à une température d'expansion du matériau en mousse métallique, garantit l'indéformabilité de la partie de structure (3) formée avant l'expansion.

6. Corps profilé à mousse métallique selon l'une des revendications précédentes, **caractérisé en ce que** le canal d'écoulement extérieur (18) est fermé à une extrémité située dans le matériau de mousse métallique et le canal d'écoulement intérieur (18a) débouche dans le canal d'écoulement extérieur (18), devant l'extrémité fermée.

7. Corps profilé à mousse métallique selon la revendication précédente, **caractérisé en ce que** le canal d'écoulement intérieur (18a) est entouré en spirale par une bande (29).

8. Corps profilé à mousse métallique selon l'une des deux revendications précédentes, **caractérisé en ce que** le canal d'écoulement intérieur et le canal d'écoulement extérieur (18, 18a) sont constitués chacun d'un matériau fibreux composite résistant à la chaleur et à la pression dans lequel sont intégrées des fibres d'un autre matériau avec une conductibilité thermique supérieure au matériau fibreux composite résistant à la chaleur et à la pression.

9. Procédé de réalisation d'un corps profilé à mousse métallique selon l'une au moins des revendications 1 à 8 dans lequel on expanse un matériau de mousse métallique au moins dans une zone (9) du corps profilé après formage du corps profilé (10; 10a; 30; 30a), **caractérisé en ce que** le matériau de mousse métallique est équilibré en température de manière interne au moyen d'un fluide d'équilibrage de température, lors de l'expansion.

10. Procédé selon la revendication précédente, **caractérisé en ce que** le matériau de mousse métallique est refroidi au moyen de l'équilibrage de température interne.

11. Procédé selon la revendication précédente, **caractérisé en ce qu'**au moyen de l'équilibrage de température interne on stoppe ou empêche une expansion du matériau de mousse métallique.

12. Procédé selon l'une des revendications précédentes, **caractérisé en ce qu'**on chauffe au moyen de l'équilibrage de température interne.

13. Procédé selon l'une au moins des revendications précédentes, **caractérisé en ce que** dans la zone du corps profilé (9), dans laquelle le matériau de mousse métallique est expansé, on introduit un profilé complémentaire (17) qui comprend le matériau de mousse métallique expansible ou est formé par celui-ci.

14. Procédé selon l'une au moins des revendications précédentes, **caractérisé en ce que** le fluide d'équilibrage de température est guidé à contre-courant dans deux canaux d'écoulement (18, 18a) situés l'un à l'intérieur de l'autre.

15. Procédé selon l'une des revendications précédentes, **caractérisé en ce que** le canal d'écoulement ou les plusieurs canaux d'écoulement est ou sont remplis d'une matière plastique après expansion du matériau de mousse métallique.
